# EUROPEAN PATENT APPLICATION

(11) **EP 4 779 968 A1**
(43) Date of publication of application: **22.07.2026**
(21) Application number: 24907862.7
(22) Date of filing: 28.11.2024
(51) Int. Cl.: H04N 9/31

(54) **ELECTRONIC APPARATUS AND CONTROL METHOD THEREOF**

(30) Priority: 18.12.2023 KR 20230184833
(71) Applicant: Samsung Electronics Co., Ltd., Suwon-si, Gyeonggi-do 16677 (KR)
(72) Inventor: JUNG, Yunsung, Suwon-si, Gyeonggi-do 16677 (KR)
(74) Representative: Appleyard Lees IP LLP
(86) International application number: PCT/KR2024/019197
(87) International publication number: WO 2025/135577

(57) **Abstract**

An electronic apparatus comprises: a sensor unit; a memory; a projection unit for outputting a light source to a projection surface; and at least one processor, wherein the at least one processor is configured to: identify a first projection position according to an environmental illuminance value based on first data obtained through the sensor unit and according to a first brightness value of the projection surface; obtain a second brightness value corresponding to the brightness of a projection image that is output by the projection unit and is at the first projection position; obtain, while the projection image is being output, a third brightness value corresponding to the brightness of a projection area, which is based on second data obtained through the sensor unit; and control the projection unit such that the projection image is output at a second projection position identified on the basis of the second brightness value and the third brightness value.

## Description

### [TECHNICAL FIELD]

Apparatuses and methods consistent with the disclosure relate to an electronic apparatus and a control method thereof, and more particularly, to an electronic apparatus capable of automatically adjusting a projection distance based on a brightness level, and a control method thereof.

### [Background Art]

A position of an electronic apparatus having a projection function that outputs an image may change. When the position of the electronic apparatus changes, a size or brightness of a projection image output to a projection surface may change.

When the electronic apparatus is positioned too close to the projection surface, the brightness increases but the size of the projection image decreases. When the electronic apparatus is positioned too far from the projection surface, a problem may arise in which the size of the projection image increases, but the sharpness or brightness decreases.

It is inconvenient for a user to manually determine the projection position and directly move the electronic apparatus to an arbitrary location.

When there is no accurate criterion for determining whether to move the projection position, it may be difficult to provide an optimal environment to a user.

### [Disclosure of Invention]

### [Solution to Problem]

The present disclosure is devised to address the above-described problems, and an object of the present disclosure is to provide an electronic apparatus capable of determining a projection position before outputting a projection image, re-determining the projection position after outputting the projection image, and moving to the determined projection position, and a control method thereof.

In accordance with an aspect of the disclosure, an electronic apparatus includes a sensor unit, a memory, a projection unit configured to output a light source to a projection surface, and at least one processor, in which the at least one processor is configured to identify a first projection position according to an environmental illuminance value based on first data obtained through the sensor unit and a first brightness value of the projection surface, obtain a second brightness value corresponding to brightness of a projection image output through the projection unit at the first projection position, obtain a third brightness value corresponding to brightness of a projection area based on second data obtained through the sensor unit while the projection image is being output, and control the projection unit such that the projection image is output at a second projection position identified based on the second brightness value and the third brightness value.

The at least one processor may be configured to obtain the environmental illuminance value corresponding to the intensity of light in an ambient environment based on the first data, which includes illuminance data obtained through an illuminance sensor included in the sensor unit.

The at least one processor may be configured to obtain the first data including a first image obtained through an image sensor included in the sensor unit, and identify an average brightness value of a plurality of pixels in a first target area corresponding to the projection surface among multiple areas included in the first image as the first brightness value of the projection surface.

The memory may be configured to store a correction distance table including a plurality of correction distances, and the at least one processor may be configured to identify the first projection position based on a correction distance corresponding to the environmental illuminance value and the first brightness value among the plurality of correction distances.

The electronic apparatus may further include a motor, and a moving member, in which the at least one processor may be configured to supply force generated by the motor to the moving member to move from a current position to the first projection position.

The at least one processor may be configured to obtain an average brightness value of a plurality of pixels included in the projection image as the second brightness value.

The at least one processor may be configured to obtain the second data including a second image obtained through an image sensor included in the sensor unit, and obtain, as the third brightness value, an average brightness value of a plurality of pixels included in a second target area corresponding to the projection area to which the projection image is output among multiple areas included in the second image.

The at least one processor may be configured to identify the second projection position closer to the projection surface than the first projection position when a difference value between the second brightness value and the third brightness value exceeds a threshold value.

The at least one processor may be configured to obtain a third distance between the user and the projection surface based on a first distance between the electronic apparatus and the projection surface and a second distance between the electronic apparatus and the user, obtain, through an image sensor included in the sensor unit, a measured size of a third target area corresponding to a projection area to which the projection image is output from among multiple areas included in the third image based on third data including a third image, and identify a size of a user interface (UI) provided by the electronic apparatus based on the third distance and the measured size.

The at least one processor may be configured to increase the size of the UI when a ratio value obtained by dividing the measured size by the third distance is less than or equal to a threshold ratio value.

In accordance with another aspect of the disclosure, a control method of an electronic apparatus includes identifying a first projection position according to an environmental illuminance value based on obtained first data and a first brightness value of a projection surface, obtaining a second brightness value corresponding to brightness of a projection image at the first projection position, obtaining a third brightness value corresponding to brightness of a projection area based on obtained second data while the projection image is being output, and outputting the projection image at a second projection position identified based on the second brightness value and the third brightness value.

The control method may further include obtaining the environmental illuminance value corresponding to the intensity of light of an ambient environment based on the first data including illuminance data.

The control method may include obtaining the first data including a first image, and identifying an average brightness value of a plurality of pixels in a first target area corresponding to the projection surface among multiple areas included in the first image as the first brightness value of the projection surface.

The electronic apparatus may store a correction distance table including a plurality of correction distances, and in the identifying of the first projection position, the first projection position may be identified based on a correction distance corresponding to the environmental illuminance value and the first brightness value among the plurality of correction distances.

The electronic apparatus may further include a motor, and a moving member, and the control method may further include supplying force generated by the motor to the moving member to move from a current position to the first projection position.

In the obtaining of the second brightness value, an average brightness value of a plurality of pixels included in the projection image may be obtained as the second brightness value.

In the obtaining of the third brightness value, the second data including the second image may be obtained, and an average brightness value of a plurality of pixels included in a second target area corresponding to the projection area to which the projection image is output among multiple areas included in the second image may be obtained as the third brightness value.

The control method may further include identifying the second projection position as being closer to the projection surface than the first projection position when a difference value between the second brightness value and the third brightness value exceeds a threshold value.

The control method may further include obtaining a third distance between the user and the projection surface based on a first distance between the electronic apparatus and the projection surface and a second distance between the electronic apparatus and the user, obtaining a measured size of a third target area corresponding to the projection area to which the projection image is output among multiple areas included in the third image based on third data including a third image, and identifying a size of a user interface (UI) provided by the electronic apparatus based on the third distance and the measured size.

The control method may further include increasing a size of the UI when a ratio value obtained by dividing the measured size by the third distance is less than or equal to a threshold ratio value.

### [Brief Description of Drawings]

FIG. 1 is a block diagram for describing the electronic apparatus according to an embodiment.
FIG. 2 is a block diagram for describing a specific configuration of the electronic apparatus of FIG. 1 according to an embodiment.
FIG. 3 is a diagram for describing a mobile projector according to an embodiment.
FIG. 4 is a diagram for describing a distance between a projection surface and an electronic apparatus according to an embodiment.
FIG. 5 is a diagram for describing a projection surface divided into multiple regions according to an embodiment.
FIG. 6 is a diagram for describing an operation of obtaining sensing data according to an embodiment.
FIG. 7 is a diagram for describing an operation of outputting a projection image to a projection surface according to an embodiment.
FIG. 8 is a diagram for describing a correction distance table according to an embodiment.
FIG. 9 is a diagram for describing a projection position calculation module according to an embodiment.
FIG. 10 is a diagram for describing an operation of outputting the projection image according to an embodiment.
FIG. 11 is a diagram for describing an operation of obtaining distance information based on a projection surface 10, a user 20, and an electronic apparatus 100, according to an embodiment.
FIG. 12 is a diagram for describing an operation of changing a size of a UI element, according to an embodiment.
FIG. 13 is a diagram for describing a screen for changing the size of the UI element, according to an embodiment.
FIG. 14 is a diagram for describing a movement operation of an electronic apparatus 100, according to an embodiment.
FIG. 15 is a diagram for describing a notification regarding position movement, according to an embodiment.
FIG. 16 is a diagram for describing a reference for position movement, according to an embodiment.
FIG. 17 is a diagram for describing a keystone correction function, according to an embodiment.
FIG. 18 is a diagram for describing the keystone correction function, according to an embodiment.
FIG. 19 is a diagram for describing a screen related to power information, according to an embodiment.
FIG. 20 is a diagram for describing an operation of changing a projection area, according to an embodiment.
FIG. 21 is a diagram for describing an operation of outputting the projection image using a plurality of apparatuses, according to an embodiment.
FIG. 22 is a diagram for describing an appropriate screen size, according to an embodiment.
FIG. 23 is a diagram for describing an operation of determining a projection position using an environment before outputting the projection image, according to an embodiment.
FIG. 24 is a diagram for describing an operation of determining a projection position using an environment after outputting the projection image, according to an embodiment.
FIG. 25 is a diagram for describing an operation of changing the size of the UI element based on a measured size of a projection area, according to an embodiment.
FIG. 26 is a diagram for describing a control method of an electronic apparatus according to an embodiment.
FIG. 27 is a diagram for describing an operation of changing the projection image based on distance.

### [Mode for Invention]

Hereinafter, the present disclosure will be described in detail with reference to the accompanying drawings.

General terms that are currently widely used were selected as terms used in embodiments of the present disclosure in consideration of functions in the present disclosure, but may be changed depending on the intention of those skilled in the art or a judicial precedent, the emergence of a new technique, and the like. In a specific case, terms arbitrarily chosen by an applicant may exist. In this case, the meaning of such terms will be mentioned in detail in a corresponding description portion of the present disclosure. Therefore, the terms used in the present disclosure should be defined on the basis of the meaning of the terms and the contents throughout the present disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the present specification may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

Singular expressions are intended to include plural expressions unless the context clearly represents otherwise. It will be further understood that the terms "comprises" or "have" used in this specification, specify the presence of stated features, steps, operations, components, parts mentioned in this specification, or a combination thereof, but do not preclude the presence or addition of one or more other features, numerals, steps, operations, components, parts, or a combination thereof.

In the disclosure, a "module" or a "~er/or" may perform at least one function or operation, and be implemented by hardware or software or be implemented by a combination of hardware and software. A plurality of "modules" or a plurality of "~ers/~ors" may be integrated in at least one module and be implemented by at least one processor (not illustrated) except for a "module" or a "~er/or" that needs to be implemented by specific hardware.

In the present disclosure, the term user may refer to a person using an electronic apparatus or a device (e.g., an artificial intelligence electronic apparatus) using an electronic apparatus.

Hereinafter, an embodiment of the disclosure will be described in detail with reference to the accompanying drawings.

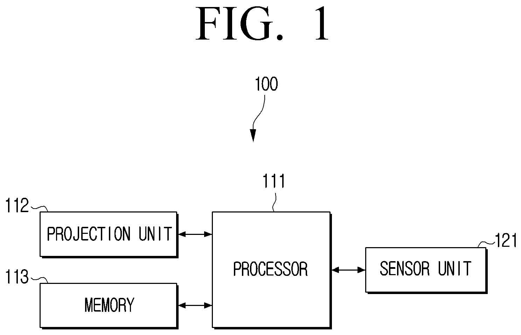

FIG. 1 is a block diagram illustrating an electronic apparatus 100 according to an embodiment.

Referring to FIG. 1, the electronic apparatus 100 may include at least one processor 111, a projection unit 112, a memory 113, and a sensor unit 121.

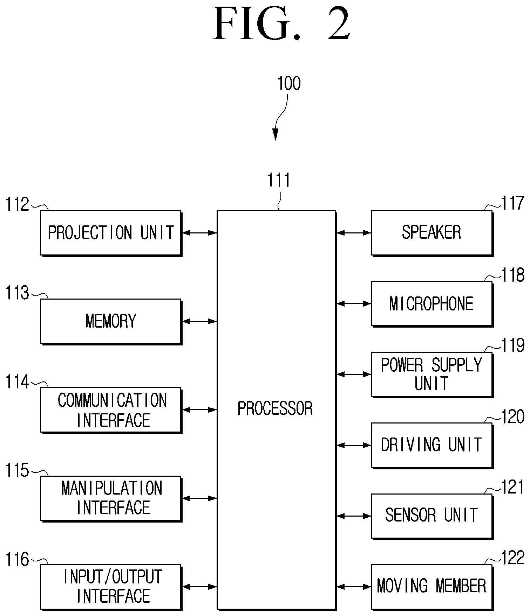

At least one processor 111 may perform an overall control operation of the electronic apparatus 100. Specifically, at least one processor 111 may perform an overall operation of the electronic apparatus 100. A detailed description of at least one processor 111 is described in FIG. 2.

The projection unit 112 is a component that projects images (projection image, content, etc.) to the outside. A detailed description of the projection unit is described in FIG. 2.

The memory 113 may store the projection image projected through the projection unit 112. The projection image may refer to not only a still image but also a continuous image (or video). The projection image may refer to an image included in the content. The memory 113 may store a driving O/S.

The sensor unit 121 may obtain sensing data. The sensor unit 121 may include at least one of an illumination sensor 121-1 and an image sensor 121-2. The electronic apparatus 100 may obtain first sensing data, second sensing data, and third sensing data in chronological order through the sensor unit 121. The electronic apparatus 100 may obtain illumination data through the illumination sensor 121-1. The electronic apparatus 100 may obtain first illumination data, second illumination data, and third illumination data through the illumination sensor 121-1.

The electronic apparatus 100 may obtain a captured image through the image sensor 121-2. The electronic apparatus 100 may obtain a first captured image, a second captured image, and a third captured image in chronological order through the image sensor 121-2.

The memory 113 may store content images. The projection unit 112 may be used to output images.

At least one processor 111 may control various operations performed in the electronic apparatus 100.

At least one processor 111 may obtain an environmental illuminance value based on the first sensing data acquired through the sensor unit 121 and obtain a first brightness value representing the brightness of a projection surface area based on the first sensing data obtained through the sensor unit 121. The first sensing data may include multiple sensing data. For example, the first sensing data may include first illuminance data and first captured data. According to the implementation example, each data may be described as separate sensing data.

The electronic apparatus 100 may identify (or acquire) various brightness values. Various brightness values may include at least one of the first brightness value, a second brightness value, or a third brightness value.

The first brightness value may represent a brightness level corresponding to a projection surface 10 in a space where the electronic apparatus 100 exists. At least one processor 111 may identify a projection surface 10 to output a projection image. At least one processor 111 may identify (or obtain or sense) the brightness value of the projection surface 10. At least one processor 111 may obtain a captured image including the projection surface 10. At least one processor 111 may identify the brightness value of the projection surface 10 included in the captured image as the first brightness value.

The second brightness value may represent the brightness value of the projection image itself. The second brightness value may represent the brightness value of the projection image itself output by the electronic apparatus 100. At least one processor 111 may obtain pixel values associated with the projection image. At least one processor 111 may identify the brightness value of the projection image itself as the second brightness value using the pixel values associated with the projection image. The second brightness value may be described as the brightness value of the projection image, a default brightness value, or a reference brightness value.

The third brightness value may represent the brightness value of the projection surface 10 while the projection image is output. At least one processor 111 may identify (or obtain or sense) the brightness value of the projection surface 10 after outputting the projection image to the projection surface 10. At least one processor 111 may obtain the captured image including the projection surface 10 while the projection image is output. The captured image may include the projection surface 10 and the output projection image.

The first brightness value and the third brightness value may be obtained based on the captured image obtained through the image sensor (e.g., a camera).

The second brightness value may be information obtained based on pixel values included in the image data itself. The capturing operation by the image sensor may not be required to obtain the second brightness value.

At least one processor 111 determines a first projection position based on the environmental illuminance value and the first brightness value, controls the projection unit 112 to output the projection image stored in the memory 113 at the first projection position, obtains the second brightness value representing the brightness of the projection image, and obtains the third brightness value representing the brightness of the projection area based on second sensing data obtained through the sensor unit 121 after the projection image is output to the projection surface 10, determines a second projection position based on the second brightness value and the third brightness value, and controls the projection unit 112 to output the projection image at the second projection position.

At least one processor 111 may obtain the first sensing data including the illuminance data through an illuminance sensor 121-1 included in the sensor unit 121, and obtain the environmental illuminance value representing the intensity of light in the ambient environment based on the illuminance data.

The illuminance data may be described as illuminance information. At least one processor 111 may obtain the environmental illuminance value representing the ambient environmental illuminance based on the illuminance data included in the first sensing data. The environmental illuminance value may be described as an ambient environmental illuminance value.

At least one processor 111 may obtain the first sensing data including the first captured image through an image sensor 121-2 included in the sensor unit 121, identify a first target area representing the projection surface area corresponding to the projection surface 10 among multiple areas included in the first captured image, and determine an average brightness value of a plurality of pixels corresponding to the first target area as the first brightness value.

At least one processor 111 may obtain the first captured image through the image sensor 121-2. At least one processor 111 may identify multiple areas included in the first captured image. At least one processor 111 may identify the projection surface area representing the projection surface 10 among the multiple areas. At least one processor 111 may identify the projection surface area as the first target area.

At least one processor 111 may obtain brightness values of a plurality of pixels included in the first target area (or projection surface area). At least one processor 111 may obtain the average brightness value of the plurality of pixels included in the first target area. At least one processor 111 may determine the average brightness value of the plurality of pixels included in the first target area as the first brightness value.

The first brightness value may represent the brightness level corresponding to the projection surface 10 in the space where the electronic apparatus 100 exists. The projection surface 10 may be included in the first captured image. An area corresponding to the projection surface 10 may be the projection surface area. At least one processor 111 may identify the projection surface area representing the projection surface 10 in the first captured image as the first target area, and determine the average brightness value of the plurality of pixels for the first target area as the first brightness value.

At least one processor 111 may determine whether to change the position of the electronic apparatus 100 based on the environmental illuminance value and the first brightness value. At least one processor 111 may determine the first projection position by considering the environmental illuminance value and the first brightness value.

According to various embodiments, at least one processor 111 may determine the first projection position using a correction distance table.

At least one processor 111 may identify a correction distance corresponding to the environmental illuminance value and the first brightness value among a plurality of correction distances, and determine the first projection position based on the correction distance.

The memory 113 may store the correction distance table including the plurality of correction distances. The correction distance table may include correction distances corresponding to the environmental illuminance value and the brightness value of the projection surface area.

The correction distance may include a distance for moving a position of the electronic apparatus 100. At least one processor 111 may determine the first projection position based on the correction distance.

The multiple correction distances included in the correction distance table may represent that the darker the ambient environment, the closer the projection surface 10 should move.

For example, when the ambient environment becomes dark, the correction distance may include distance information for moving closer to the projection surface 10.

For example, when the ambient environment becomes bright, the correction distance may include distance information for moving further away from the projection surface 10 or distance information for maintaining a current position.

At least one processor 111 may determine the first projection position based on the correction distance. At least one processor 111 may move to the first projection position.

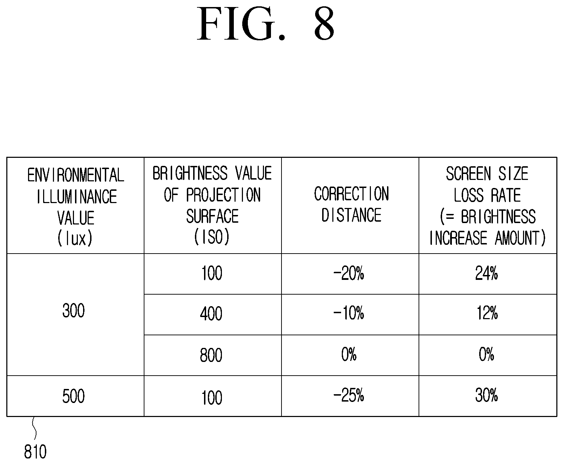

A detailed description of the correction distance table is described in FIG. 8.

According to various embodiments, at least one processor 111 may determine the first projection position based on a preset event. The preset event may refer to an event in which the ambient environment is determined to be dark or an event in which the brightness of the projection surface is determined to be low.

For example, when the environmental illuminance value is below a first threshold value, at least one processor 111 may identify that the preset event has occurred.

For example, when the first brightness value is less than or equal to a second threshold value, at least one processor 111 may identify that the preset event has occurred.

For example, when the environmental illuminance value is less than or equal to the first threshold and the first brightness value is less than or equal to the second threshold, at least one processor 111 may identify that the preset event has occurred.

The electronic apparatus 100 may further include a motor and a moving member, and at least one processor 111 may supply force generated by the motor to the moving member to move from the current position to the first projection position.

At least one processor 111 may obtain driving force from the motor. At least one processor 111 may supply (or transmit) the driving force generated by the motor to the moving member. The moving member may include a wheel-shaped member. The moving member may rotate based on the received driving force. When the moving member rotates, the position of the electronic apparatus 100 may change. At least one processor 111 may drive by rotating left and right.

At least one processor 111 may move to the first projection position. At least one processor 111 may output the projection image to the projection surface 10 through the projection unit 112 after moving to the first projection position.

At least one processor 111 may obtain the projection image.

At least one processor 111 may obtain content including the projection image. The content may include the projection image and audio data corresponding to the projection image.

For example, the content may be data stored in the memory 113 of the electronic apparatus 100.

For example, the content may be received through an external source device. The external source device may include a content providing device or a set-top box.

For example, the content may be received through an external server. The external server may include a content providing server.

At least one processor 111 may obtain the projection image included in the content and output the obtained projection image to the projection surface 10 via the projection unit 112.

At least one processor 111 may obtain audio data included in the content and output the obtained audio data via the speaker 117.

At least one processor 111 may determine the average brightness value of the plurality of pixels included in the projection image as the second brightness value.

At least one processor 111 may obtain the brightness value of the projection image. The projection image may be included in image data. The image data may include a frame representing the projection image. A frame representing the projection image includes a plurality of pixels, and the frame representing the projection image may include RGB values or brightness values for each of the plurality of pixels.

For example, the frame representing the projection image may include RGB values corresponding to each of the plurality of pixels. At least one processor 111 may obtain the brightness values corresponding to each of the plurality of pixels based on the RGB values.

For example, the frame representing the projection image may include brightness values corresponding to each of the plurality of pixels.

At least one processor 111 may obtain a first value by adding the brightness values of the plurality of pixels included in the first target area. At least one processor 111 may obtain a second value by dividing the first value by the number of pixels included in the first target area. At least one processor 111 may determine the second value as an average brightness value of the first target area. At least one processor 111 may determine the second value as the second brightness value.

The second brightness value may represent an original brightness value when the projection image is not output to the projection surface 10. The second brightness value may be described as the brightness value of the projection image, a default brightness value, or a reference brightness value.

At least one processor 111 may obtain the second sensing data including the second captured image through the image sensor 121-2 included in the sensor unit 121, identify a second target area corresponding to the projection area where the projection image is output from among multiple areas included in the second captured image, and determine the average brightness value of the plurality of pixels corresponding to the second target area as the third brightness value.

After outputting the projection image at the first projection position, at least one processor 111 may obtain the second captured image through the image sensor 121-2. At least one processor 111 may obtain the second captured image in a direction of the projection surface 10 where the projection image is output. The second captured image may be included in the second sensing data.

At least one processor 111 may identify the projection area in the second captured image. The projection area may be an area where the projection image output to the projection surface 10 is output (or displayed). At least one processor 111 may identify the projection area in which the projection image is output from the second captured image. The projection area may be described as the second target area. At least one processor 111 may set the projection area as the second target area.

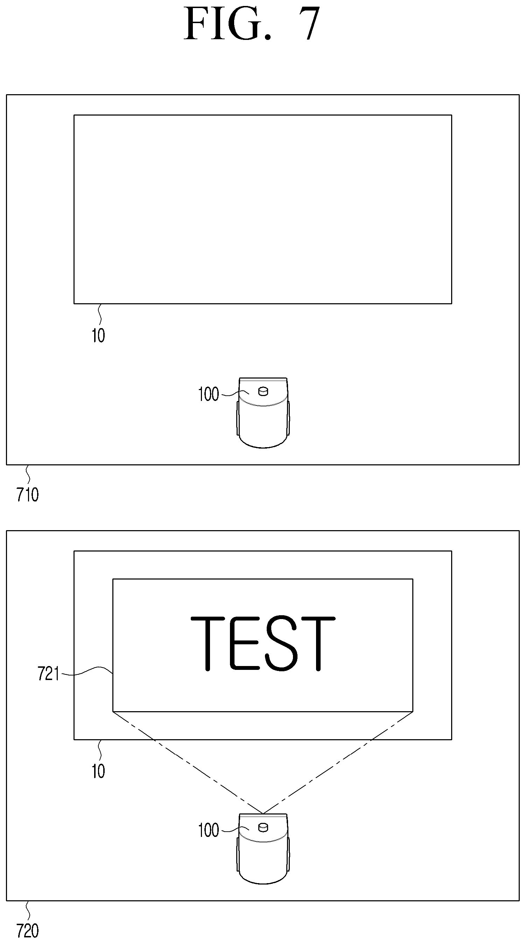

The projection surface area may represent an area corresponding to the projection surface 10 in embodiment 710 of FIG. 7.

The projection area may represent an area to which a projection image 721 is output in embodiment 720 of FIG. 7.

At least one processor 111 may identify the plurality of pixels included in the second target area. At least one processor 111 may obtain a plurality of pixels and brightness values corresponding to each of the plurality of pixels. At least one processor 111 may determine the average brightness value of the plurality of pixels as the third brightness value.

At least one processor 111 may obtain a third value by adding the brightness values of the plurality of pixels included in the second target area. At least one processor 111 may obtain a fourth value by dividing the third value by the number of pixels included in the second target area.

At least one processor 111 may determine the fourth value as the average brightness value corresponding to the second target area. At least one processor 111 may determine the fourth value as the third brightness value.

According to various embodiments, the second sensing data may obtain a second environmental illuminance value in addition to the second captured image. The environmental illuminance value included in the first sensing data may be described as the first environmental illuminance value.

When the preset event is identified after the projection image is output to the projection surface 10, at least one processor 111 may change (or update) the projection position.

The preset event may refer to an event in which the output projection image is determined to be dark. Depending on lens settings of the projection unit 112 or the ambient environment, a problem may arise in which the brightness of an actually output projection image is perceived as dark. At least one processor 111 may identify whether the preset event has occurred by comparing the original brightness with the actually captured brightness.

At least one processor 111 may obtain a difference value between the second brightness value and the third brightness value, and when the difference value exceeds a threshold value (third threshold value), the second projection position may be determined to be closer to the projection surface 10 than the first projection position.

When the difference value between the second brightness value and the third brightness value exceeds the third threshold value, at least one processor 111 may identify that the preset event has occurred.

The second brightness value may represent the original brightness level before the projection image is output.

The third brightness value may represent brightness information represented in the captured image after the projection image is output. The third brightness value may represent the brightness value of the area to which the projection image is output. The projection image may be output to a projection area of the projection surface 10. The third brightness value may include the brightness value of the area of the projection surface 10 to which the projection image is output.

At least one processor 111 may obtain a difference value between the second brightness value and the third brightness value. At least one processor 111 may calculate the difference value by subtracting the third brightness value from the second brightness value. A larger positive difference value may represent that the captured brightness is lower than the original brightness.

At least one processor 111 may compare the difference value with the third threshold value to determine whether to change the position of the electronic apparatus 100. When the position changes, the position determined by at least one processor 111 may be recorded as the second projection position.

When the difference value exceeds the third threshold value, at least one processor 111 may determine the second projection position that is closer to the projection surface 10 than the first projection position. At least one processor 111 may move from the first projection position to the second projection position.

When the difference value is less than or equal to the third threshold value, at least one processor 111 may maintain the current position (the first projection position).

At least one processor 111 may obtain a first distance d10 between the electronic apparatus 100 and the projection surface 10, a second distance d20 between the electronic apparatus 100 and the user 20, and a third distance d30 between the user 20 and the projection surface 10 based on the first distance d10 and the second distance d20.

At least one processor 111 may obtain the third sensing data including the third captured image through the image sensor 121-2 included in the sensor unit 121.

At least one processor 111 may identify a third target area corresponding to the projection area to which the projection image is output, among multiple areas included in the third captured image.

At least one processor 111 may identify a measured size of the third target area. At least one processor 111 may identify a measured size s10 of the projection area to which the projection image is output from the third captured image.

At least one processor 111 may determine a size of a user interface (UI) provided by the electronic apparatus based on a third distance d30 and the measured size s10.

At least one processor 111 may increase the size of the UI when a ratio value obtained by dividing the measured size by the third distance is less than or equal to a threshold ratio value.

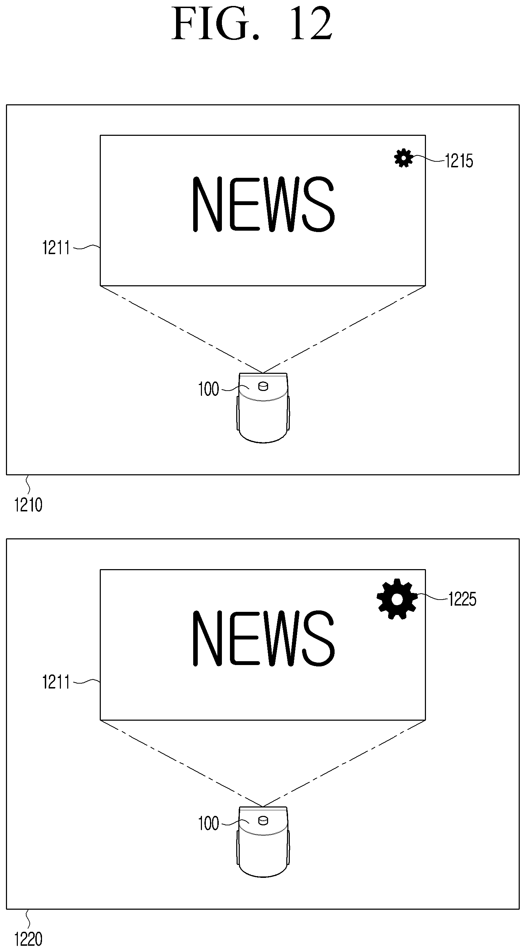

Descriptions of the first distance d10, the second distance d20, the third distance d30, and the measured size s10 are described in FIG. 12.

The UI provided by the electronic apparatus 100 may include UI items, UI elements, etc.

The UI may include at least one of a setting UI, a notification UI, an advertisement UI, and other UIs.

The setting UI may include a UI related to a setting menu.

The notification UI may include a UI representing various notifications related to the electronic apparatus 100.

The advertisement UI may include a UI representing advertisement information provided by the electronic apparatus 100.

The UI may include at least one of a graphical UI and a text UI. The graphical UI may include icons, images, etc. The text UI may include text data displayed in a preset language.

At least one processor 111 may set (or determine) a size of the UI. The UI provided by the electronic apparatus 100 may be output to the projection surface 10 via the projection unit 112. At least one processor 111 may output the UI based on a preset size. The preset size may refer to a resolution of the UI. The size of the UI may indicate the size displayed according to the projection ratio when output from a preset distance. The size of the UI may be described as a default size of the UI.

The smaller the measured size s10, the closer the electronic apparatus 100 may be to the projection surface 10. At least one processor 111 may obtain a fifth value obtained by dividing the measured size s10 by the third distance d30. At least one processor 111 may compare the fifth value with a fourth threshold value to determine whether to change the size of the UI.

A smaller fifth value may refer to that the size of the output projection image is smaller compared to the distance between the projection surface 10 and the user 20. When the projection image is output less than or equal to a certain size while the user 20 is farther away from the projection surface 10, the user 20 may not be able to view the projection image accurately.

When the fifth value is less than or equal to the fourth threshold value, at least one processor 111 may change the size of the UI. At least one processor 111 may obtain a sixth value by dividing the fourth threshold value by the fifth value. At least one processor 111 may change the size of the UI based on the sixth value. At least one processor 111 may change the size of the UI by multiplying the current size of the UI by the sixth value.

For example, it is assumed that the measured size is 80 cm and the third distance d30 between the projection surface 10 and the user 20 is 250 cm. The fourth threshold value is assumed to be 0.4. At least one processor 111 may obtain the fifth value (0.32) by dividing the measured size (80 cm) by the third distance (250 cm). Since the fifth value (0.32) is less than or equal to the fourth threshold value (0.4), at least one processor 111 may change the size of the UI. At least one processor 111 may obtain the sixth value (1.25) by dividing the fourth threshold value (0.4) by the fifth value (0.32). At least one processor 111 may change the size of the UI based on the sixth value (1.25). At least one processor 111 may increase (or expand) the size of the UI by 1.25 times the current size.

According to various embodiments, at least one processor 111 may change the size of the UI using the movement distance.

At least one processor 111 may obtain (or calculate) the movement distance between the first projection position and the second projection position.

At least one processor 111 may determine the size of the UI provided by the electronic apparatus based on the third distance d30 and the movement distance.

At least one processor 111 may increase the size of the UI when the ratio value, which is obtained by dividing the movement distance by the third distance d30, is less than or equal to the threshold ratio value.

At least one processor 111 may move from the first projection position to the second projection position. At least one processor 111 may identify the distance between the first projection position and the second projection position as the movement distance. The movement distance may be described as a fourth distance.

As the movement distance increases, the electronic apparatus 100 may move closer to the projection surface 10. At least one processor 111 may obtain the fifth value, which is a value obtained by dividing the movement distance by the third distance d30. At least one processor 111 may compare the fifth value with the fourth threshold value to determine whether to change the size of the UI.

When the fifth value is less than or equal to the fourth threshold value, at least one processor 111 may change the size of the UI. At least one processor 111 may obtain the sixth value by dividing the fourth threshold value by the fifth value. At least one processor 111 may change the size of the UI based on the sixth value. At least one processor 111 may change the size of the UI by multiplying the current size of the UI by the sixth value.

For example, it is assumed that the movement distance is 80 cm and the third distance d30 between the projection surface 10 and the user 20 is 250 cm. The fourth threshold value is assumed to be 0.4. At least one processor 111 may obtain the fifth value (0.32) by dividing the movement distance (80 cm) by the third distance (250 cm). Since the fifth value (0.32) is less than or equal to the fourth threshold value (0.4), at least one processor 111 may change the size of the UI. At least one processor 111 may obtain the sixth value (1.25) by dividing the fourth threshold value (0.4) by the fifth value (0.32). At least one processor 111 may change the size of the UI based on the sixth value (1.25). At least one processor 111 may increase (or expand) the size of the UI by 1.25 times the current size.

When the fifth value exceeds the fourth threshold value, at least one processor 111 may maintain the size of the UI.

According to various embodiments, at least one processor 111 may determine whether to change the size of the UI by using a change in screen size instead of the movement distance. The projection ratio may be a value determined by the projection unit 112. The projection ratio may be a value obtained by dividing the size of the projection image by a projection distance. Therefore, the change in the size of the projection image and the change in the projection distance may have a proportional relationship. At least one processor 111 may obtain the same calculation result by using the change in screen size instead of the movement distance when changing the size of the UI.

At least one processor 111 may obtain the third sensing data including the third captured image through the image sensor 121-2 included in the sensor unit 121.

At least one processor 111 may identify the projection area in which the projection image is projected from the third captured image. At least one processor 111 may obtain the measured size s10 of the projection area.

At least one processor 111 may obtain a change value in the measured size of the projection area.

At least one processor 111 may output the projection image at the first projection position. At least one processor 111 may obtain the second captured image at the first projection position. At least one processor 111 may identify the projection area included in the second captured image. At least one processor 111 may identify a first measured size of the projection area.

At least one processor 111 may output the projection image at the second projection position. At least one processor 111 may obtain the third captured image at the second projection position. At least one processor 111 may identify the projection area included in the third captured image. At least one processor 111 may identify a second measured size of the projection area.

At least one processor 111 may obtain a difference value between the first measured size and the second measured size. The measured size difference value may be described as a measured size change value.

At least one processor 111 may obtain the fifth value obtained by dividing the measured size difference value by the third distance d30. At least one processor 111 may compare the fifth value with the fourth threshold value to determine whether to change the size of the UI. The subsequent calculation operation may be identical to the calculation method using the movement distance. Duplicate descriptions will be omitted.

For example, it is assumed that the first measured size is 100 cm, the second measured size is 20 cm, and the third distance d30 between the projection surface 10 and the user 20 is 250 cm. The fourth threshold value is assumed to be 0.4. At least one processor 111 may calculate the measured size change value as 80 cm. At least one processor 111 may obtain the fifth value (0.32) by dividing the measured size change value (80 cm) by the third distance (250 cm). Since the fifth value (0.32) is less than or equal to the fourth threshold value (0.4), at least one processor 111 may change the size of the UI. At least one processor 111 may obtain the sixth value (1.25) by dividing the fourth threshold value (0.4) by the fifth value (0.32). At least one processor 111 may change the size of the UI based on the sixth value (1.25). At least one processor 111 may increase (or expand) the size of the UI by 1.25 times the current size.

According to various embodiments, the electronic apparatus 100 may compare the brightness of the projection surface and the screen brightness. The electronic apparatus 100 may determine the user's visibility based on the brightness comparison result. The electronic apparatus 100 may obtain status information of the battery (or power supply unit). The electronic apparatus 100 may determine the projection type (normal projection method, ultra-short focus method) and identify the projection distance based on at least one of the brightness comparison result and the battery status information.

According to various embodiments, the electronic apparatus 100 may be connected to an Internet of Things (IoT) device. The IoT device may include at least one of a device capable of outputting a light source or a device capable of determining the transmittance (or irradiance) of an external light source. For example, the IoT device may include a smart light bulb, a smart lighting fixture, a blind device, etc.

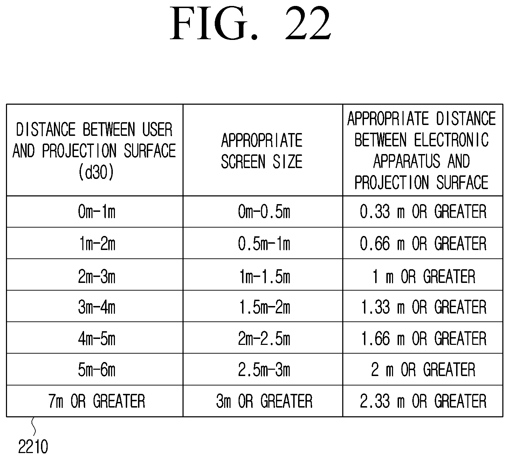

The electronic apparatus 100 may control the IoT device based on the occurrence of an event in which brightness needs to be secured. When a preset standard may not be met even with distance movement or brightness control of the electronic apparatus 100 itself, the electronic apparatus 100 may change the lighting of the IoT device. When the lighting of the IoT device is controlled, the brightness of the measured projection surface or the brightness of the projection image may change. The electronic apparatus 100 may satisfy the preset standard by controlling the IoT device. The intensity of light source of the IoT device may be adjusted or the light transmittance (or irradiance) may repeatedly change until the preset standard is met. The preset standard may include the conditions described in FIGS. 22 to 26.

The event in which the brightness needs to be secured may include at least one of the following: an event in which movement to an identified (or calculated) position is impossible, an event in which the battery power is less than or equal to a threshold value, or an event (e.g., outside the projection ratio) in which the projection shape determined at the projection position is impossible.

FIG. 2 is a block diagram for describing a specific configuration of the electronic apparatus 100 of FIG. 1 according to an embodiment.

Referring to FIG. 2, the electronic apparatus 100 may include at least one of at least one processor 111, a projection unit 112, a memory 113, a communication interface 114, a manipulation interface 115, an input/output interface 116, a speaker 117, a microphone 118, a power supply unit 119, a driving unit 120, a sensor unit 121, or a moving member 122.

The components illustrated in FIG. 2 are merely various embodiments, and some components may be omitted, and new components may be added.

Contents already described in FIG. 1 are omitted.

At least one processor 111 may be implemented by a digital signal processor (DSP), a microprocessor, or a time controller (TCON) that processes a digital signal. However, the processor 120 is not limited thereto, but may include one or more of a central processing unit (CPU), a micro controller unit (MCU), a micro processing unit (MPU), a controller, an application processor (AP), a graphics-processing unit (GPU), a communication processor (CP), and an advanced reduced instruction set computer (RISC) machines (ARM) processor, or may be defined by these terms. At least one processor 111 may be implemented by a system-on-chip (SoC) or a large scale integration (LSI) in which a processing algorithm is embedded, or may be implemented in a field programmable gate array (FPGA) form. At least one processor 111 may perform various functions by executing computer executable instructions stored in the memory 113.

The projection unit 112 is a component that projects an image to the outside. According to various embodiments of the present disclosure, the projection unit 112 may be implemented with various projection methods (for example, a cathode-ray tube (CRT) method, a liquid crystal display (LCD) method, a digital light processing (DLP) method, a laser method, etc.). For example, the CRT method has the same principle as a CRT monitor. The CRT method displays an image on a screen by magnifying an image with a lens in front of a cathode-ray tube (CRT). Depending on the number of cathode-ray tubes, the CRT is divided into a single-tube type and a three-tube type. In the case of the three-tube type, red, green, and blue cathode-ray tubes may be implemented separately.

As another example, the LCD method is a method of displaying an image by transmitting light from a light source to a liquid crystal. The LCD method is divided into a single-plate type and a three-plate type. In the case of the three-plate type, light from a light source may be separated into red, green, and blue by a dichroic mirror (a mirror that reflects only a specific color of light and transmits the rest), transmit the liquid crystal, and then focused back into a single point.

As another example, the DLP method is a method of displaying an image using a digital micromirror device (DMD) chip. The DLP type of projection unit may include a light source, a color wheel, a DMD chip, a projection lens, etc. Light output from the light source may be colored as it passes through a rotating color wheel. The light passing through the color wheel is input to the DMD chip. The DMD chip includes numerous micromirrors and reflects light input to the DMD chip. The projection lens may serve to magnify the light reflected from the DMD chip to the image size.

As another example, the laser method includes a diode pumped solid state (DPSSS) laser and a galvanometer. Lasers that output various colors use three DPSS lasers, one for each RGB color installed separately, and then employ special mirrors to overlap their optical axes. The galvanometer includes a mirror and a high-power motor to move a mirror at high speeds. For example, the galvanometer may rotate a mirror at up to 40 kHz/sec. The galvanometer is mounted according to a scan direction. Generally, since the projector performs planar scanning, the galvanometer may also be arranged separately along x and y axes.

The projection unit 112 may include various types of light sources. For example, the projection unit 112 may include at least one light source of a lamp, an LED, and a laser.

The projection unit 112 may output images with a 4:3 aspect ratio, a 5:4 aspect ratio, or a 16:9 wide aspect ratio, depending on the purpose of the electronic apparatus 100 or the user's settings, and may output images with various resolutions, such as WVGA (854*480), SVGA (800*600), XGA (1024*768), WXGA (1280*720), WXGA (1280*800), SXGA (1280*1024), UXGA (1600*1200), and Full HD (1920*1080), depending on the aspect ratio.

The projection unit 112 may perform various functions for adjusting the output image under the control of at least one processor 111. For example, the projection unit 112 may perform functions such as zoom, keystone, quick corner (4-corner) keystone, and lens shift.

Specifically, the projection unit 112 may magnify or reduce the image depending on the distance (projection distance) from the screen. In other words, the zoom function may be performed depending on the distance from the screen. In this case, the zoom function may include a hardware method that adjusts the screen size by moving the lens, a software method that adjusts the screen size by cropping the image, etc. When the zoom function is performed, the image focus needs to be adjusted. For example, the methods of adjusting a focus include manual focus, motorized focus, etc. The manual focus method refers to a method of manually adjusting a focus, while the motorized focus refers to a method in which the projector automatically focuses using a built-in motor when the zoom function is performed. When performing the zoom function, the projection unit 112 may provide a digital zoom function through software, and an optical zoom function that performs the zoom function by moving the lens through the driving unit 120.

The projection unit 112 may perform a keystone correction function. When the height is not suitable for frontal projection, the screen may be distorted upward or downward. The keystone correction function refers to a function of correcting the distorted screen. For example, when distortion occurs in a horizontal direction of the screen, horizontal keystone correction may be used, and when distortion occurs in a vertical direction of the screen, vertical keystone correction may be used. The quick corner (4-corner) keystone correction function is a function of correcting a screen when a center area of the screen is normal but corner areas are unbalanced. A lens shift function is a function that shifts an image as it is when the image extends beyond a screen.

The projection unit 112 may automatically analyze the ambient environment and projection environment without a user input to provide zoom/keystone/focus functions. Specifically, the projection unit 112 may automatically provide zoom/keystone/focus functions based on the distance between the electronic apparatus 100 and the screen detected by a sensor (depth camera, distance sensor, infrared sensor, light sensor, etc.), information about the space where the electronic apparatus 100 is currently positioned, information about the amount of ambient light, etc.

The projection unit 112 may provide a lighting function using a light source. In particular, the projection unit 112 may provide a lighting function by outputting a light source using an LED. According to various embodiments, the projection unit 112 may include one LED, and according to another embodiment, the electronic apparatus 100 may include multiple LEDs. Depending on the implementation example, the projection unit 112 may output a light source using a surface-emitting LED. The surface-emitting LED may mean an LED having a structure in which an optical sheet is arranged on the upper side of the LED so that the light source is evenly distributed and output. Specifically, when a light source is output through an LED, the light source may be evenly distributed through an optical sheet, and the light source distributed through the optical sheet may be incident on the display panel.

The projection unit 112 may provide a dimming function to adjust the intensity of the light source to the user. Specifically, when the user input for adjusting the intensity of the light source is received from the user through the manipulation interface 115 (e.g., a touch display button or dial), the projection unit 112 may control the LED to output the intensity of the light source corresponding to the received user input.

The projection unit 112 may provide the dimming function based on content analyzed by at least one processor 111 without the user input. Specifically, the projection unit 112 may control the LED to output the intensity of the light source based on information (e.g., content type, content brightness, etc.) about the currently provided content.

The projection unit 112 may control the color temperature under the control of at least one processor 111. At least one processor 111 may control the color temperature based on the content. Specifically, when the content is identified to be output, at least one processor 111 may obtain frame-by-frame color information of the content whose output has been determined. Then, at least one processor 111 may control the color temperature based on the obtained frame-by-frame color information. At least one processor 111 may obtain at least one primary color of the frame based on the frame-by-frame color information. Then, at least one processor 111 may adjust the color temperature based on the obtained one or more primary colors. For example, the color temperature that at least one processor 111 may adjust may be classified into a warm type or a cold type. It is assumed that a frame (hereinafter, output frame) to be output includes a scene where a fire has occurred. At least one processor 111 may identify (or obtain) that the primary color is red based on the color information included in the current output frame. In addition, at least one processor 111 may identify a color temperature corresponding to the identified primary color (red). The color temperature corresponding to red may be a warm type. At least one processor 111 may utilize an artificial intelligence model to obtain color information or a primary color of the frame. According to various embodiments, the artificial intelligence model may be stored in the electronic apparatus 100 (e.g., memory 113). According to other embodiments, the artificial intelligence model may be stored in the external server capable of communicating with the electronic apparatus 100.

The memory 113 may be implemented by an internal memory such as a read-only memory (ROM) (for example, an electrically erasable programmable read-only memory (EEPROM)), a random access memory (RAM), or the like, included in at least one processor 111 or be implemented by a memory separate from at least one processor 111. In this case, the memory 113 may be implemented in a form of a memory embedded in the electronic apparatus 100 or a form of a memory attachable to and detachable from the electronic apparatus 100, depending on a data storing purpose. For example, data for traveling the electronic apparatus 100 may be stored in the memory embedded in the electronic apparatus 100, and data for an extension function of the electronic apparatus 100 may be stored in the memory attachable to and detachable from the electronic apparatus 100.

The memory embedded in the electronic apparatus 100 may be implemented by at least one of a volatile memory (for example, a dynamic RAM (DRAM), a static RAM (SRAM), a synchronous dynamic RAM (SDRAM), or the like) or a nonvolatile memory (for example, a one time programmable ROM (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, or a solid state drive (SSD)), and the memory attachable to and detachable from the electronic apparatus 100 may be implemented in a form such as a memory card (for example, a compact flash (CF), a secure digital (SD), a micro-SD, a mini-SD, an extreme digital (xD), a multi-media card (MMC), or the like), an external memory (for example, a universal serial bus (USB) memory) connectable to a USB port, or the like.

At least one command related to the electronic apparatus 100 may be stored in the memory 113. The memory 113 may store an operating system (O/S) for traveling the electronic apparatus 100. The memory 113 may store various software programs or applications for operating the electronic apparatus 100 according to various embodiments of the present disclosure. The memory 113 may include a semiconductor memory such as a flash memory, or a magnetic storage medium such as a hard disk, or the like.

Specifically, various software modules for operating the electronic apparatus 100 according to various embodiments of the present disclosure may be stored in the memory 113, and at least one processor 111 may execute various software modules stored in the memory 113 to control the operation of the computing device 100. That is, the memory 113 is accessed by at least one processor 111, and readout/recording/correction/deletion/update, and the like, of data in the memory 110 may be performed by at least one processor 111.

In the present disclosure, the term 'memory' may be used as meaning including the memory 113, a read only memory (ROM) (not illustrated) in at lest one processor 111, a random access memory (RAM) (not illustrated), or a memory card (not illustrated) (for example, a micro secure digital (SD) card or a memory stick) mounted in the electronic apparatus 100.

The communication interface 114 is a component performing communication with various types of external apparatuses depending on various types of communication manners. The communication interface 114 may include a wireless communication module or a wired communication module. Each communication module may be implemented in the form of at least one hardware chip.

The wireless communication module may be a module that wirelessly communicates with an external device. For example, the wireless communication module may include at least one of a Wi-Fi module, a Bluetooth module, an infrared communication module, or other communication modules.

The Wi-Fi module and the Bluetooth module may perform communication in the Wi-Fi method and the Bluetooth method, respectively. In the case of using the Wi-Fi module or the Bluetooth module, various connection information such as a service set identifier (SSID), a session key, and the like, is first transmitted and received, communication is connected using the connection information, and various information may then be transmitted and received.

The infrared communication module performs communication according to an infrared data association (IrDA) technology of wirelessly transmitting data to a short distance using an infrared ray disposed between a visible ray and a millimeter wave.

Other wireless communication modules may include at least one communication chip performing communication according to various wireless communication standards such as zigbee, 3^{rd} generation (3G), 3^{rd} generation partnership project (3GPP), long term evolution (LTE), LTE advanced (LTE-A), 4^{th} generation (4G), 5^{th} generation (5G), and the like, in addition to the communication manner described above.

The wired communication module may be a module that communicates with an external device in a wired manner. For example, the wired communication module may include at least one of a local area network (LAN) module, an Ethernet module, a pair cable, a coaxial cable, an optical fiber cable, or an ultra wide-band (UWB) module.

The manipulation interface 115 may include various types of input devices. For example, the manipulation interface 115 may include a physical button. In this case, the physical button may include a function key, a directional key (e.g., a four-way key), or a dial button. According to various embodiments, the physical button may be implemented as multiple keys. According to other embodiments, the physical button may be implemented as one key. When the physical button is implemented as one key, the electronic apparatus 100 may receive a user input in which one key is pressed for a threshold time or longer. When the user input in which one key is pressed for the threshold time or longer is received, at least one processor 111 may perform a function corresponding to the user input. For example, at least one processor 111 may provide a lighting function based on the user input.

The manipulation interface 115 may receive a user input using a non-contact method. When receiving a user input using a contact method, physical force should be transmitted to the electronic apparatus 100. Therefore, a method for controlling the electronic apparatus 100 regardless of physical force may be required. Specifically, the manipulation interface 115 may receive user gestures and perform operations corresponding to the received user gestures. The manipulation interface 115 may receive user gestures through a sensor (e.g., an image sensor or an infrared sensor).

The manipulation interface 115 may receive a user input using a touch method. For example, the manipulation interface 115 may receive a user input through a touch sensor. According to various embodiments, the touch method may be implemented in a non-contact manner. For example, the touch sensor may determine whether a user's body has approached within a threshold distance. The touch sensor may identify user input even when the user does not make contact with the touch sensor. According to another implementation example, the touch sensor may identify user input by a user touching the touch sensor.

The electronic apparatus 100 may receive user input in various ways in addition to the above-described manipulation interface 115. In various embodiments, the electronic apparatus 100 may receive user input through an external remote control device. The external remote control device may be a remote control device corresponding to the electronic apparatus 100 (e.g., a dedicated control device for the electronic apparatus 100) or a user's portable communication device (e.g., a smartphone or wearable device). The user's portable communication device may store an application for controlling the electronic apparatus 100. The portable communication device may obtain user input through the stored application and transmit the obtained user input to the electronic apparatus 100. The electronic apparatus 100 may receive user input from the portable communication device and perform an operation corresponding to the user's control command.

The electronic apparatus 100 may receive user input using voice recognition. According to various embodiments, the electronic apparatus 100 may receive a user voice through a microphone included in the electronic apparatus 100. According to other embodiments, the electronic apparatus 100 may receive a user voice from a microphone or an external device. Specifically, the external device may obtain a user voice through a microphone of the external device and transmit the obtained user voice to the electronic apparatus 100. The user voice transmitted from the external device may be audio data or digital data (e.g., audio data converted into a frequency domain, etc.) converted from audio data. The electronic apparatus 100 may perform an operation corresponding to the received user voice. Specifically, the electronic apparatus 100 may receive the audio data corresponding to the user voice through the microphone. Then, the electronic apparatus 100 may convert the received audio data into the digital data. Then, the electronic apparatus 100 may convert the converted digital data into text data using an speech to text (STT) function. According to various embodiments, the STT function may be performed directly on the electronic apparatus 100.

According to other embodiments, the STT function may be performed on the external server. The electronic apparatus 100 may transmit the digital data to the external server. The external server may convert the digital data into the text data and obtain control command data based on the converted text data. The external server may transmit the control command data (which may also include text data) to the electronic apparatus 100. The electronic apparatus 100 may perform an operation corresponding to the user voice based on the obtained control command data.

The electronic apparatus 100 may provide a voice recognition function using a single assistant (or an artificial intelligence assistant, such as Bixby^{™}). However, these are merely various embodiments, and a voice recognition function may be provided through a plurality of assistants. In this case, the electronic apparatus 100 may provide a voice recognition function by selecting one of multiple assistants based on a trigger word corresponding to the assistant or a specific key present on the remote control.

The electronic apparatus 100 may receive the user input using screen interaction. The screen interaction may refer to a function of identifying whether a predetermined event occurs through an image projected by the electronic apparatus 100 on a screen (or projection surface) and obtaining the user input based on the predetermined event. The predetermined event may refer to an event in which a predetermined object is identified at a specific position (e.g., a position where a UI for receiving the user input is projected). The predetermined object may include at least one of part (e.g., a finger) of the user's body, a pointer, or a laser point. When the predetermined object is identified at the position corresponding to the projected UI, the electronic apparatus 100 may identify that the user input for selecting the projected UI has been received. For example, the electronic apparatus 100 may project a guide image to display a UI on the screen. Then, the electronic apparatus 100 may identify whether the user selects the projected UI. Specifically, the electronic apparatus 100 may identify that the user has selected the projected UI when the predetermined event is identified at the position of the projected UI. The projected UI may include at least one item. The electronic apparatus 100 may perform spatial analysis to identify whether the predetermined event is at the position of the projected UI. The electronic apparatus 100 may perform spatial analysis through a sensor (e.g., an image sensor, an infrared sensor, a depth camera, a distance sensor, etc.). By performing the spatial analysis, the electronic apparatus 100 may identify whether the predetermined event occurs at a specific position (position where the UI is projected). When it is identified that a predetermined event has occurred at a specific position (position where the UI is projected), the electronic apparatus 100 may identify that a user input for selecting a UI corresponding to a specific position is received.

The input/output interface 116 is configured to input/output at least one of an audio signal and an image signal. The input/output interface 116 may receive at least one of an audio signal and an image signal from an external device and output control commands to the external device.

According to the implementation example, the input/output interface 116 may be implemented as an interface that inputs/outputs only the audio signal and an interface that inputs/outputs only the image signal, or implemented as a single interface that inputs/outputs both the audio signal and image signal.

According to various embodiments of the present disclosure, the input/output interface 116 may be implemented as a wired input/output interface of at least one of a high definition multimedia interface (HDMI), a mobile high-definition link (MHL), a universal serial bus (USB), a USB C-type, a display port (DP), Thunderbolt, a video graphics array (VGA) port, an RGB port, a D-subminiature (D-SUB), and a digital visual interface (DVI). According to various embodiments, the wired input/output interface may be implemented as an interface that inputs/outputs only the audio signal and an interface that inputs/outputs only the image signal, or implemented as a single interface that inputs/outputs both the audio signal and image signal.

The electronic apparatus 100 may receive data through the wired input/output interface, which is merely various embodiments, and may be supplied with power through the wired input/output interface. For example, the electronic apparatus 100 may be supplied with power from an external battery via the USB C-type or power from an outlet via a power adapter. As another example, the electronic apparatus 100 may be supplied with power from an external device (e.g., a laptop, a monitor, etc.) via a DP.

The electronic apparatus 100 may be configured such that the audio signal is input through the wired input/output interface, and the image signal is input through the wireless input/output interface (or communication interface). Alternatively, the electronic apparatus 100 may be configured such that the audio signal is input through the wireless input/output interface (or communication interface), and the image signal is input through the wired input/output interface.

The speaker 117 is a component that outputs audio signals. In particular, the speaker 117 may include an audio output mixer, an audio signal processor, and an acoustic output module. The acoustic output mixer may synthesize multiple audio signals to be output into at least one audio signal. For example, the audio output mixer may synthesize an analog audio signal and another analog audio signal (e.g., an analog audio signal received from an external source) into at least one analog audio signal. The acoustic output module may include a speaker or an output terminal. According to various embodiments, the acoustic output module may include multiple speakers. In this case, the acoustic output module may be arranged inside a main body, and sound emitted by covering at least a portion of a diaphragm of the acoustic output module may pass through a waveguide and be transmitted to the outside of the main body. The acoustic output module includes multiple audio output units, and the multiple audio output units are arranged symmetrically on the exterior of the main body, thereby emitting sound in all directions, i.e., 360°.

The microphone 118 is a component for receiving the user voice or other sounds and converting the user voice or other sounds into audio data. The microphone 118 may receive the user voice in an activated state. For example, the microphone 118 may be formed integrally on an upper side or in a front direction, a side direction, etc., of the electronic apparatus 100. The microphone 118 may include various configurations such as a microphone that collects user voices in analog form, an amplifier circuit that amplifies the collected user voices, an A/D conversion circuit that samples the amplified user voices and converts the amplified user voices into digital signals, and a filter circuit that removes noise components from the converted digital signals.

The power supply unit 119 may be supplied with power from the outside and supply power to various components of the electronic apparatus 100. The power supply unit 119 according to various embodiments of the present disclosure may be supplied with power through various methods. In various embodiments, the power supply unit 119 may be supplied with power using a connector 130 as illustrated in FIG. 1. The power supply unit 119 may be supplied with power using a 220V DC power cord. However, the power supply unit 119 is not limited thereto, and may be supplied with power using a USB power cord or a wireless charging method.

The power supply unit 119 may be supplied with power using an internal battery or an external battery. The power supply unit 119 according to various embodiments of the present disclosure may be supplied with power through the internal battery. For example, the power supply unit 119 may charge the power of the internal battery using at least one of a 220V DC power cord, a USB power cord, and a USB C-Type power cord, and may be supplied with power through the charged internal battery. The power supply unit 119 according to various embodiments of the present disclosure may be supplied with power through the external battery. For example, when the electronic apparatus 100 is connected to the external battery through various wired communication methods such as a USB power cord, a USB C-Type power cord, or a socket home, the power supply unit 119 may be supplied with power through the external battery. That is, the power supply unit 119 may be supplied with power directly from the external battery, or may charge the internal battery through the external battery and then be supplied with power from the charged internal battery.

The power supply unit 119 according to the present disclosure may be supplied with power using at least one of the multiple power supply methods described above.

Regarding power consumption, the electronic apparatus 100 may have power consumption of less than a preset value (e.g., 43 W) due to factors such as the socket type and other standards. In this case, the electronic apparatus 100 may vary power consumption to reduce power consumption when using a battery. That is, the electronic apparatus 100 may vary power consumption based on the power supply method, power usage, etc.

The driving unit 120 may drive at least one hardware component included in the electronic apparatus 100. The driving unit 120 may generate physical force and transmit the physical force to at least one hardware component included in the electronic apparatus 100.

The driving unit 120 may generate driving power for the movement of hardware components included in the electronic apparatus 100 (e.g., movement of the electronic apparatus 100) or rotation of the components (e.g., rotation of the projection lens).

The driving unit 120 may adjust the projection direction (or projection angle) of the projection unit 112. The driving unit 120 may move the position of the electronic apparatus 100. The driving unit 120 may control the moving member to move the electronic apparatus 100. For example, the driving unit 120 may control the moving member using the motor.

The sensor unit 121 may include at least one sensor. Specifically, the sensor unit 121 may include at least one of a tilt sensor for sensing a tilt of the electronic apparatus 100 and an image sensor for capturing an image. The tilt sensor may be an acceleration sensor or a gyro sensor, and the image sensor may refer to a camera or a depth camera. The tilt sensor may be described as a motion sensor. The sensor unit 121 may include various sensors in addition to the tilt sensor or the image sensor. For example, the sensor unit 121 may include an illuminance sensor and a distance sensor. The distance sensor may be a time of flight (ToF). The sensor unit 121 may include a LiDAR sensor.

The electronic apparatus 100 may control a lighting function in conjunction with an external device. Specifically, the electronic apparatus 100 may receive lighting information from the external device. The lighting information may include at least one of brightness information and color temperature information set by the external device. The external device may refer to a device (e.g., an IoT device included in the same home/work network) connected to the same network as the electronic apparatus 100 or may refer to a device (for example, a remote control server) that is not on the same network as the electronic apparatus 100 but is capable of communicating with the electronic apparatus 100. For example, it is assumed that an external lighting device (IoT device) included in the same network as the electronic apparatus 100 is outputting red light at a brightness of 50. The external lighting device (IoT device) may directly or indirectly transmit lighting information (e.g., information representing that it is outputting red light at a brightness of 50) to the electronic apparatus 100. The electronic apparatus 100 may control the output of the light source based on the lighting information received from the external lighting device. For example, when the lighting information received from the external lighting device includes information representing that red light is output at a brightness of 50, the electronic apparatus 100 may output red light at a brightness of 50.

The electronic apparatus 100 may control the lighting function based on biometric information. Specifically, at least one processor 111 may obtain user's biometric information. The biometric information may include at least one of user's body temperature, heart rate, blood pressure, respiration, and electrocardiogram. The biometric information may include various information in addition to the information described above. For example, the electronic apparatus 100 may include a sensor for measuring biometric information. At least one processor 111 may obtain the user's biometric information through the sensor and control the output of the light source based on the obtained biometric information. As another example, at least one processor 111 may receive the biometric information from an external device via the input/output interface 116. The external device may refer to the user's portable communication device (e.g., a smartphone or a wearable device). At least one processor 111 may obtain the user's biometric information from the external device and control the output of the light source based on the obtained biometric information. According to an implementation example, the electronic apparatus 100 may identify whether the user is sleeping, and when the user is identified as sleeping (or preparing for sleep), at least one processor 111 may control the output of the light source based on the user's biometric information.

The electronic apparatus 100 according to various embodiments of the present disclosure may provide various smart functions. Specifically, the electronic apparatus 100 is connected to a portable terminal device for controlling the electronic apparatus 100, and the screen output from the electronic apparatus 100 may be controlled through the user input that is input from the portable terminal device. As an example, the portable terminal device may be implemented as a smartphone including a touch display, and the electronic apparatus 100 receives and outputs screen data provided by the portable terminal device from the portable terminal device, and the screen output from the electronic apparatus 100 may be controlled according to the user input that is input from the portable terminal device.

The electronic apparatus 100 may be connected to a mobile terminal device via various communication methods, such as Miracast, Airplay, wireless DEX, and Remote PC, thereby sharing content or music provided by the mobile terminal device.

The mobile terminal device and the electronic apparatus 100 may be connected via various connection methods. In various embodiments, the mobile terminal device may search for the electronic apparatus 100 to perform a wireless connection, or the electronic apparatus 100 may search for the mobile terminal device to perform a wireless connection. Furthermore, the electronic apparatus 100 may output content provided by the mobile terminal device.

In various embodiments, in a state in which the mobile terminal device is currently outputting specific content or music, when the mobile terminal device may be placed near the electronic apparatus 100 and then a preset gesture (e.g., a motion tap view) is detected on the display of the mobile terminal device, the electronic apparatus 100 may output the content or music being output by the mobile terminal device.

In various embodiments, the mobile terminal device comes closer to the electronic apparatus 100 to a preset distance or less (e.g., a non-contact tap view) or the mobile terminal device comes into contact with the electronic apparatus 100 twice within a short interval (e.g., a contact tap view) while the mobile terminal device is outputting specific content or music, the electronic apparatus 100 may output the content or music being output on the mobile terminal device.

The above-described embodiments described that the electronic apparatus 100 provides a screen identical to the screen provided by the mobile terminal device. However, the present disclosure is not limited thereto. That is, when a connection is established between the mobile terminal device and the electronic apparatus 100, the mobile terminal device may output a first screen provided by the mobile terminal device, and the electronic apparatus 100 may output a second screen provided by the mobile terminal device, which is different from the first screen. For example, the first screen may be a screen provided by a first application installed on the mobile terminal device, and the second screen may be a screen provided by a second application installed on the mobile terminal device. For example, the first screen and the second screen may be different screens provided by a single application installed on the mobile terminal device. For example, the first screen may include a remote control-style UI for controlling the second screen.

The electronic apparatus 100 according to the present disclosure may output a standby screen. For example, when the electronic apparatus 100 is not connected to an external device or when no input is received from the external device for a preset period of time, the electronic apparatus 100 may output the standby screen. The conditions for the electronic apparatus 100 to output the standby screen are not limited to the examples described above, and the standby screen may be output under various conditions.

The electronic apparatus 100 may output the standby screen in the form of a blue screen, but the present disclosure is not limited thereto. For example, the electronic apparatus 100 may extract only the shape of a specific object from data received from an external device to obtain an amorphous object, and output the standby screen including the obtained amorphous object.

The electronic apparatus 100 may further include a display (not illustrated).

The display (not illustrated) may be implemented by various types of displays such as a liquid crystal display (LCD), an organic light emitting diode (OLED) display, a plasma display panel (PDP), and the like. A driving circuit, a backlight unit, and the like, that may be implemented in a form such as an amorphous silicon thin film transistor (a-si TFT), a low temperature poly silicon (LTPS) TFT, an organic TFT (OTFT), and the like, may be included in the display (not illustrated). The display (not illustrated) may be implemented as a touch screen coupled with a touch sensor, a flexible display, a three-dimensional display (3D display), etc. According to various embodiments of the present disclosure, the display (not illustrated) may include not only a display panel that outputs an image, but also a bezel that houses the display panel. In particular, according to various embodiments of the present disclosure, the bezel may include a touch sensor (not illustrated) for detecting user interaction.

The electronic apparatus 100 may further include a shutter unit (not illustrated).

The shutter unit (not illustrated) may include at least one of a shutter, a fixing member, a rail, or a body.

The shutter may block light output from the projection unit 112. The fixing member may fix the position of the shutter. The rail may be a path for moving the shutter and the fixing member. The body may be a structure including the shutter and the fixing member.

The moving member 122 may refer to a member for moving from a first position to a second position in a space where the electronic apparatus 100 is arranged. The electronic apparatus 100 may control the moving member 122 to move the electronic apparatus 100 using force generated by the driving unit 120. The electronic apparatus 100 may generate force to be transmitted to the moving member 122 using the motor included in the driving unit 120.

The moving member 122 may include at least one wheel (e.g., a circular wheel). The electronic apparatus 100 may move to a target position (or designated position) via the moving member. When the user input or control command is received, the electronic apparatus 100 may rotate the moving member by transmitting force generated through the motor to the moving member. The electronic apparatus 100 may control the moving member to adjust a rotation speed, a rotation direction, etc. The electronic apparatus 100 may perform a movement operation (or movement function) by controlling the moving member based on the target position, a direction of travel, etc.

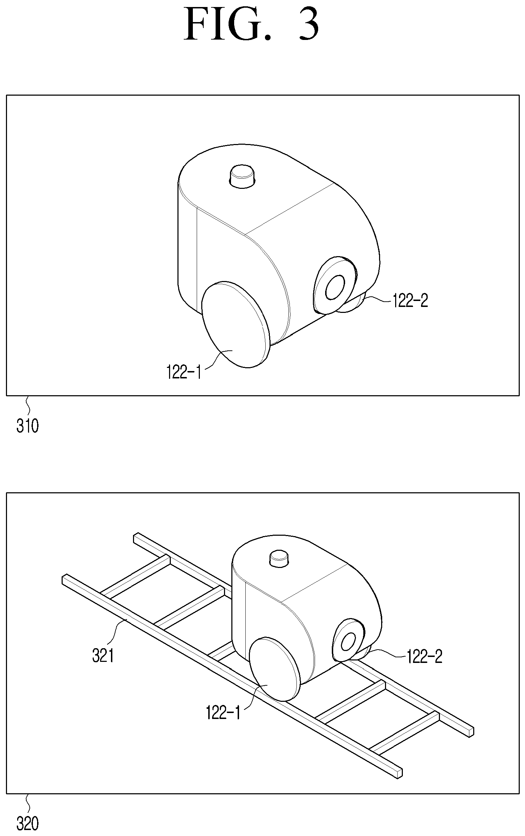

FIG. 3 is a diagram for describing a mobile projector according to an embodiment.

The electronic apparatus 100 may be implemented as a mobile device. The electronic apparatus 100 may be implemented as a mobile projector or a mobile image output device.

The electronic apparatus 100 may include the moving member 122. The moving member 122 may refer to a member for moving from the first position to the second position in the space where the electronic apparatus 100 is arranged. The moving member 122 may include at least one wheel (e.g., a circular wheel). The electronic apparatus 100 may move to the target position (designated position) via the moving member.

Referring to embodiment 310 of FIG. 3, the electronic apparatus 100 may move by a user's pushing force. When the user pushes the electronic apparatus 100, the moving member 122 of the electronic apparatus 100 may rotate. The moving member 122 may include a wheel, and the electronic apparatus 100 may move by the moving member 122 that rotates due to an external force.

Referring to embodiment 320 of FIG. 3, the moving member 122 may move via a fixed member 321. The fixed member 321 may include a movable rail. The electronic apparatus 100 may be placed on the movable rail. The electronic apparatus 100 may move on the movable rail. The electronic apparatus 100 does not include the movable rail as a component thereof; the movable rail may be a component installed by the user.

The electronic apparatus 100 may control the moving member 122 to move the electronic apparatus 100 using the force generated by the driving unit 120. The electronic apparatus 100 may generate force to be transmitted to the moving member 122 using the motor included in the driving unit 120.

When the user input or control command is received, the electronic apparatus 100 may rotate the moving member 122 by transmitting the force generated through the motor to the moving member 122. The electronic apparatus 100 may control the moving member 122 to adjust the rotation speed, the rotation direction, etc. The electronic apparatus 100 may perform the movement operation (or movement function) by controlling the moving member 122 based on the target position, the direction of travel, etc.

The electronic apparatus 100 may travel based on at least one of a preset movement speed or a preset acceleration. The preset movement speed or acceleration may be changed according to user settings.

According to various embodiments, the electronic apparatus 100 may control the speed or acceleration based on the preset event. The electronic apparatus 100 may identify whether the preset event has occurred. To identify whether the preset event has occurred, the electronic apparatus 100 may obtain at least one of travel data (or map data) or sensing data.

When the electronic apparatus 100 identifies the preset event as occurring, the electronic apparatus 100 may travel by changing the speed or acceleration. The preset event may include at least one of an event for traveling to the designated position or an event for identifying the preset object.

The event for traveling to the designated position may include at least one of an event for starting traveling at the current location or an event for stopping traveling at the designated position. When the control command (or user input) for traveling from the current location to the designated position is obtained, the electronic apparatus 100 may increase at least one of the speed or acceleration. When it is determined that the electronic apparatus 100 has reached the threshold distance from the designated position, the electronic apparatus 100 may decrease at least one of the speed or acceleration.

The preset object may include an obstacle object. When an obstacle object is identified, the electronic apparatus 100 may decrease the acceleration. The acceleration may increase in the opposite direction to the direction of travel. When the acceleration decreases, the speed increase amount of the electronic apparatus 100 decreases, and when the acceleration is in the opposite direction to the direction of travel, the speed may decrease.

According to various embodiments, the electronic apparatus 100 may move over the fixed member 321 by the force transmitted through the driving unit 120. The electronic apparatus 100 may automatically move the fixed member 321 using the force generated by the driving unit 120 rather than an external force. The automatic movement operation may be described as a sliding type.

According to various embodiments, the electronic apparatus 100 may move to the identified target position based on the user input. The target position may include a designated position to which the electronic apparatus 100 is to move. The user may input a command to the electronic apparatus 100 to move to the target position. The electronic apparatus 100 may receive the user input for moving to the target position.

For example, the user input may include information about the position to which the electronic apparatus 100 is to move. The electronic apparatus 100 may determine the position information included in the user input as the target position and move to the target position.

For example, the user input may include the information about the position of the projection surface 10 on which the electronic apparatus 100 outputs the projection image. The electronic apparatus 100 may determine the target position at which the electronic apparatus 100 will output the projection image based on the position information of the projection surface 10 included in the user input. The electronic apparatus 100 may move to the determined target position.

The user input including the target position may be received (or obtained) through the external device connected to the electronic apparatus 100.

For example, the external device may include a remote control device capable of communicating with the electronic apparatus 100.

For example, the external device may include a user terminal device capable of communicating with the electronic apparatus 100.

The electronic apparatus 100 may identify the target position through the sensor unit 121. The sensor unit 121 may obtain sensing data about the surroundings of the electronic apparatus 100. The electronic apparatus 100 may identify the target position based on the sensing data.

For example, the electronic apparatus 100 may identify, from sensing data, a laser beam emitted by a user to point to a target position. When the user points the laser beam at the target position with a laser, etc., the electronic apparatus 100 may sense the position of the laser beam to identify the target position.

For example, the electronic apparatus 100 may identify, from the sensing data, a user gesture indicating a target position. When the user points the target position with a finger (or an object representing a pointing direction), the electronic apparatus 100 may sense the user's gesture to identify the target position.

The electronic apparatus 100 may include the projection unit 112. The electronic apparatus 100 may control the projection unit 112 to output the projection image.

According to various embodiments, the electronic apparatus 100 may include the projection unit 112 utilizing ultra-short throw (UST) method. The ultra-short throw method may refer to a method of projecting an image at a relatively close distance (e.g., 1 m or less). Despite the close distance, a clear projection image may be output to the projection surface 10.

According to various embodiments, the electronic apparatus 100 may include the projection unit 112 utilizing a conventional method. The projection unit 112 may include various types of light sources. For example, the projection unit 112 may include at least one light source of a lamp, an LED, and a laser. The normal method may include a method of outputting the projection image at a distance exceeding 1 m.

According to various embodiments, the electronic apparatus 100 may output the projection image using both the ultra-short throw method and the normal method at the same projection position. The electronic apparatus 100 may output the projection image using both the ultra-short throw method and the normal method at the same time.

The electronic apparatus 100 may divide a first area and a second area from the entire projection area for projecting the projection image. The electronic apparatus 100 may output the projection image to the first area using the ultra-short throw method and to the second area using the normal method.

For example, the projection image output to the first area and the projection image output to the second area may be sub-images generated based on the same projection image (source image).

For example, the projection image output to the first area and the projection image output to the second area may be different projection images.

For example, the electronic apparatus 100 may output the projection image to the first area using the ultra-short throw method and to the second area using the normal method by using the same light source.

For example, the electronic apparatus 100 may output the projection image to the first area using the ultra-short throw method and to the second area using the normal method by using different light sources. The electronic apparatus 100 may output the projection image to the first area using the ultra-short throw method through a first light source output from a first light source unit, and may output the projection image to the second area using the normal method through a second light source output from a second light source unit.

According to various embodiments, the electronic apparatus 100 may be implemented as a fixed projector rather than a mobile projector. The electronic apparatus 100 may be implemented in a form that does not include a movable member.

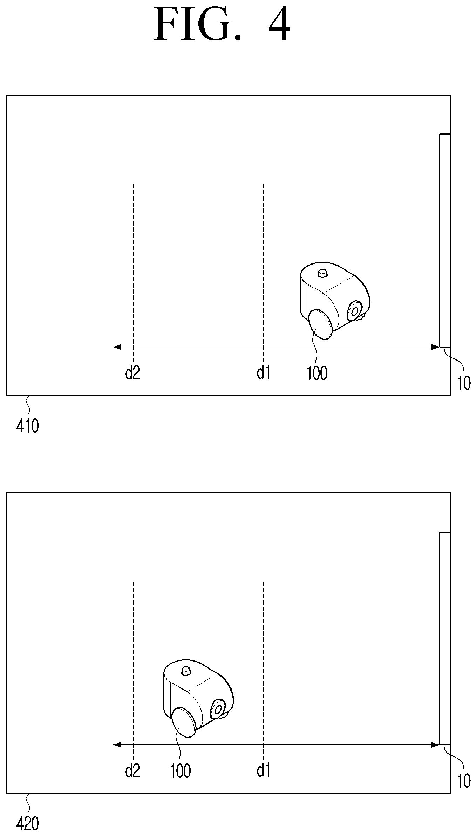

FIG. 4 is a diagram for describing the distance between the projection surface 10 and the electronic apparatus 100 according to an embodiment.

Referring to FIG. 4, the electronic apparatus 100 may determine a projection method based on the distance between the electronic apparatus 100 and the projection surface 10.

The projection method may include at least one of the ultra-short throw (UST) method or the normal method. The ultra-short throw method may be described as the first method, and the normal method may be described as the second method. The electronic apparatus 100 may obtain (or calculate) the distance between the position of the electronic apparatus 100 and the position of the projection surface 10 and determine the projection method based on the obtained distance.

When the distance between the electronic apparatus 100 and the projection surface 10 is less than or equal to the threshold distance, the electronic apparatus 100 may output the projection image using the ultra-short throw method. When the distance between the electronic apparatus 100 and the projection surface 10 exceeds the threshold distance, the electronic apparatus 100 may output the projection image using the normal method.

Referring to embodiment 410, a situation is described where the distance between the electronic apparatus 100 and the projection surface 10 is less than or equal to a threshold distance d1. The electronic apparatus 100 may output the projection image using the ultra-short throw method.

Referring to embodiment 420, a situation is described where the distance between the electronic apparatus 100 and the projection surface 10 exceeds the threshold distance d1. The electronic apparatus 100 may output the projection image using the normal method.

The threshold distance d1 may be described as a first threshold distance. When the distance between the electronic apparatus 100 and the projection surface 10 exceeds a second threshold distance d2, the electronic apparatus 100 may control the distance between the electronic apparatus 100 and the projection surface 10 to be within the second threshold distance d2. The electronic apparatus 100 may determine the target position where the distance between the electronic apparatus 100 and the projection surface 10 is within the second threshold distance d2 and move to the target position. After movement, the electronic apparatus 100 may output the projection image.

According to various embodiments, the electronic apparatus 100 may include a plurality of lenses.

The electronic apparatus 100 may include a first lens corresponding to the ultra-short throw (UST) method. The electronic apparatus 100 may include a second lens corresponding to the normal method. The first and second lenses may have different refractive indices.

The electronic apparatus 100 may determine the projection method using the projection environment (or surrounding environment). The electronic apparatus 100 may determine a lens corresponding to the determined method. The electronic apparatus 100 may output the projection image through the determined lens.

According to various embodiments, the electronic apparatus 100 may include an integrated lens (or first lens). Based on the integrated lens, the electronic apparatus 100 may output the projection image in the ultra-short throw (UST) method and the normal method. The electronic apparatus 100 may implement various projection methods with a single lens.

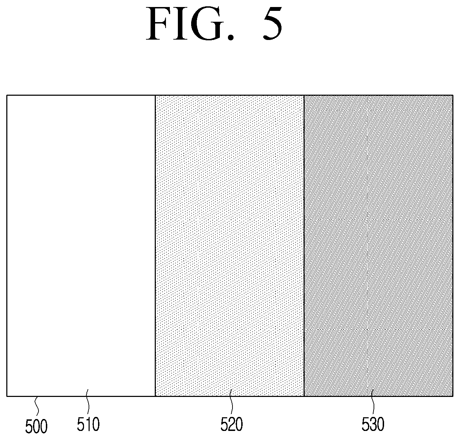

FIG. 5 is a diagram for describing the projection surface 10 divided into multiple regions according to an embodiment.

Referring to FIG. 5, the electronic apparatus 100 may classify a projection image 500 into multiple areas 510, 520, and 530. The electronic apparatus 100 may perform a video correction function on the divided multiple areas.

The electronic apparatus 100 may perform the video correction function. The video correction function may refer to a function of changing the projection image. The video correction function may include at least one of an operation of changing the resolution of the image, an operation of changing the brightness of the image, and an operation of changing the color of the image. The video correction function may be described as a content correction function.

The electronic apparatus 100 may determine a target area for video correction within the entire area of the projection image. After determining the target area, the electronic apparatus 100 may perform the video correction function on the target area.

The electronic apparatus 100 may divide (or classify) the entire area of the projection image into multiple areas. The electronic apparatus 100 may divide the entire area of the projection image into multiple areas using brightness map information. The electronic apparatus 100 may obtain a brightness value of each pixel of the projection image. The electronic apparatus 100 may determine which brightness range the brightness value of each pixel falls within, thereby dividing (or classifying) the class of each pixel. The brightness value may be expressed as a luminance value.

For example, it is assumed that a first range, a second range, and a third range are divided based on the brightness value range. The electronic device 100 can analyze, based on the brightness value of each of the plurality of pixels, which of a first range, a second range, or a third range each pixel belongs to. The first range, the second range, and the third range may be expressed as a first class (or first group), a second class (or second group), and a third class (or third group). The electronic device 100 may determine which range (or divide or group) the plurality of pixels belongs to, and may divide regions for each range. The electronic apparatus 100 may perform the video correction function for each of the divided areas.

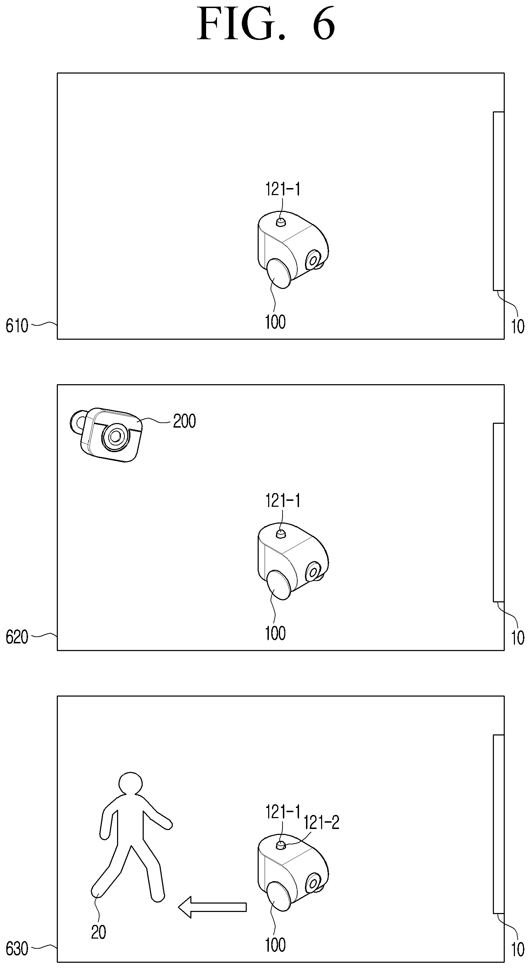

FIG. 6 is a diagram for describing an operation of obtaining sensing data according to an embodiment.

Referring to embodiment 610 of FIG. 6, the electronic apparatus 100 may include the sensor unit 121. The sensor unit 121 may include an illuminance sensor 121-1. The electronic apparatus 100 may obtain sensing data through the illumination sensor 121-1. The electronic apparatus 100 may obtain ambient environmental illuminance information based on the illuminance value included in the sensing data.

Referring to embodiment 620 of FIG. 6, the electronic apparatus 100 may obtain sensing data from an external device 200. The external device 200 may include a device capable of sensing the illuminance value. For example, the external device 200 may include at least one of an Internet of Things (IoT) camera and an illuminance sensor. The electronic apparatus 100 may communicate with the external device 200. The electronic apparatus 100 may transmit a control command to the external device 200 to sense the illuminance value. The external device 200 may obtain the sensing data based on the control command received from the electronic apparatus 100. The external device 200 may transmit the sensing data to the electronic apparatus 100. The electronic apparatus 100 may obtain the illuminance value included in the sensing data. The electronic apparatus 100 may obtain the ambient environment illuminance information based on the illuminance value included in the sensing data.

Referring to embodiment 630 of FIG. 6, the electronic apparatus 100 may include the sensor unit 121. The sensor unit 121 may include the illuminance sensor 121-1 and the image sensor 121-2.

The electronic apparatus 100 may obtain a captured image through the image sensor 121-2. The electronic apparatus 100 may identify the position of the user 20 based on the captured image.

The electronic apparatus 100 may obtain the sensing data at the position of the user 20. After moving to the position of the user 20, the electronic apparatus 100 may obtain the illumination data (or sensing data) through the illumination sensor 121-1.

According to various embodiments, the electronic apparatus 100 may communicate with the external device 200. The external device 200 may include a lighting device or a display device. The electronic apparatus 100 may transmit a control command for controlling brightness to the external device 200. The external device 200 may output a light source based on the control command.

FIG. 7 is a diagram for describing an operation of outputting the projection image to the projection surface 10 according to an embodiment.

Referring to an embodiment 710 of FIG. 7, the electronic apparatus 100 may obtain the sensing data for the projection surface 10. The sensing data may include a captured image. The electronic apparatus 100 may obtain the sensing data including the captured image through the image sensor 121-2. The electronic apparatus 100 may obtain the captured image including the projection surface 10.

The electronic apparatus 100 may obtain the captured image in a state (or environment) in which the aperture is fixed and the shutter speed is fixed. The electronic apparatus 100 may obtain the captured image based on sensitivity information. The sensitivity information may include information regarding exposure settings related to light. The sensitivity information may include information representing the exposure sensitivity associated with the image sensor.

For example, the sensitivity information may include International Organization for Standardization (ISO) sensitivity. The higher ISO sensitivity may indicate increased exposure to light. The average brightness of the captured image obtained at a first ISO sensitivity (or ISO value) may be brighter than the average brightness of the captured image obtained at a second ISO sensitivity lower than the first ISO sensitivity.

After obtaining the captured image, the electronic apparatus 100 may obtain an average B (brightness) value based on a hue, saturation, brightness (HSB) region.

The electronic apparatus 100 may convert (or change) the captured image to the HSB region (or HSB color space). The HSB region may represent hue, saturation, and brightness for a target image. The electronic apparatus 100 may convert RGB values included in the captured image into the HSB region. The electronic apparatus 100 may obtain an HSB value including a hue value, a saturation value, and a brightness value of each of a plurality of pixels included in the captured image. The electronic apparatus 100 may obtain the first value by adding up the brightness values for all pixels, and obtain the second value by dividing the first value by the number of all pixels. The electronic apparatus 100 may determine the second value as an average B value of the captured image.The electronic apparatus 100 may obtain the captured image through the image sensor. The electronic apparatus 100 may identify the projection surface 10 by identifying an object representing the projection surface 10 among a plurality of objects included in the captured image. The electronic apparatus 100 may identify an object representing the projection surface 10 or an area representing the projection surface 10 in the captured image. The area representing the projection surface 10 may be described as the projection surface area.

For example, the electronic apparatus 100 may determine an area representing the projection surface 10 for obtaining a brightness value. The area for obtaining the brightness value may be determined as a target area. The electronic apparatus 100 may obtain the brightness value of the target area using an average function, a maximum function, a minimum function, etc. The electronic apparatus 100 may obtain the brightness value of the target area. The electronic apparatus 100 may obtain at least one of an average brightness value, a maximum brightness value, and a minimum brightness value of the target area. One of the brightness values associated with the target area may be determined as a representative brightness value.

For example, the electronic apparatus 100 may obtain the brightness value of the entire area representing the projection surface 10. The brightness value may include at least one of the average brightness value, the maximum brightness value, and the minimum brightness value. The brightness value may be described as brightness information. The electronic apparatus 100 may generate the brightness map information based on the brightness value of the entire area representing the projection surface 10. The brightness map information may represent map information that maps the positions of each of the plurality of pixels included in the captured image and the brightness values corresponding to the positions.

According to various embodiments, the electronic apparatus 100 may capture the projection surface 10 without outputting an image. The electronic apparatus 100 may obtain the captured image by capturing the projection surface 10 without outputting any image through the projection unit 112.

According to various embodiments, the electronic apparatus 100 may capture the projection surface 10 while outputting a reference image. The reference image may be described as a text image or a preset image. Outputting the reference image allows for more accurate measurement of the brightness of the projection surface 10. When it is difficult to accurately measure the brightness of the projection surface 10 due to the ambient environment, the electronic apparatus 100 may output the reference image to the projection surface 10 and obtain the captured image while the reference image is projected onto the projection surface 10.

The electronic apparatus 100 may obtain the captured image through the external device 200. The electronic apparatus 100 may generate a control command for capturing the projection surface 10. The electronic apparatus 100 may transmit the control command for capturing the projection surface 10 to the external device 200. The external device 200 may obtain the captured image by capturing the projection surface 10 based on the control command. The external device 200 may transmit the captured image to the electronic apparatus 100. The electronic apparatus 200 may receive the captured image from the electronic apparatus 100. The electronic apparatus 100 may obtain the projection surface brightness value based on the captured image received from the external device 200. The external device 200 may include an Internet of Things (IoT) camera or a user terminal device including a camera.

Referring to embodiment 720, at least one processor 111 may output a projection image 721 to the projection surface 10. The area of the projection surface 10 to which the projection image 721 is output may be identified as a projection area.

FIG. 8 is a diagram for describing a correction distance table according to an embodiment.

Table 810 of FIG. 8 may represent the correction distance table. The correction distance table may include correction distances corresponding to the environmental illuminance value and the projection surface brightness value. The environmental illuminance value may be described as the environmental illuminance value or the ambient environmental illuminance value. The projection surface brightness value may be described as the brightness value of the projection surface 10 or the projection surface luminance value.

The projection surface brightness value may be described as the first brightness value.

The electronic apparatus 100 may obtain the environmental illuminance value through the illuminance sensor 121-1. The environmental illuminance value may be described as the ambient environmental illuminance value. The electronic apparatus 100 may obtain the projection surface brightness value through the image sensor 121-2.

The electronic apparatus 100 may obtain (or identify) correction distance information corresponding to the environmental illuminance value and the projection surface brightness value among the multiple correction distances included in the correction distance table. The electronic apparatus 100 may change the projection position of the electronic apparatus 100 based on the correction distance information.

For example, it is assumed that the environmental illuminance value is 300 lux and the projection surface brightness value is 100 ISO. The electronic apparatus 100 may determine the correction distance information as -20%. The electronic apparatus 100 may move 20% closer to the projection surface 10.

The correction distance table may include a screen size loss rate corresponding to the correction distance. As the electronic apparatus gets closer to the projection surface 10, the screen size may decrease and the brightness may increase.

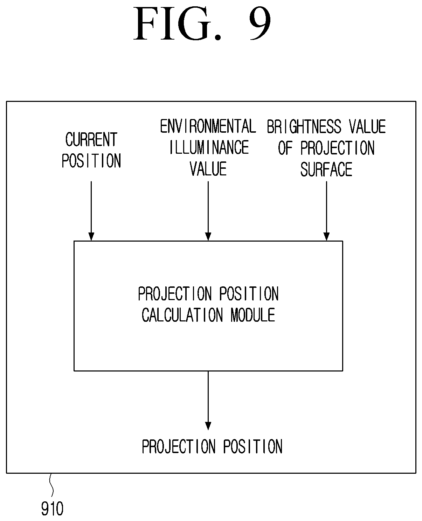

FIG. 9 is a diagram for describing a projection position calculation module according to an embodiment.

Referring to embodiment 910 of FIG. 9, the electronic apparatus 100 may determine a projection position using a projection position calculation module. The electronic apparatus 100 may input at least one of the current position, the environmental illuminance value, and the projection surface brightness value to the projection position calculation module. The electronic apparatus 100 may obtain the projection position as output data of the projection position calculation module. The electronic apparatus 100 may move to the projection position.

The projection position calculation module may be described as a projection position calculation model, a projection position determination model, etc. The projection position calculation module may include a proportional equation for calculating an optimal movement distance.

According to various embodiments, the electronic apparatus 100 may obtain the correction distance information using the environmental illuminance value. The electronic apparatus 100 may have difficulty obtaining the projection surface brightness value when the image sensor 121-2 may not be used or the image quality of the captured image becomes low, resulting in poor analysis accuracy. The electronic apparatus 100 may obtain the correction distance information using only the environmental illuminance value.

When the environmental illuminance value is less than or equal to a threshold value, the electronic apparatus 100 may obtain the correction distance information. The electronic apparatus 100 may move closer to the projection surface 10. The electronic apparatus 100 may obtain the correction distance information based on the environmental illuminance value. The lower the environmental illuminance value, the greater the correction distance. The lower the sensed illuminance value, the closer the electronic apparatus 100 may determine to move to the projection surface 10.

According to various embodiments, the electronic apparatus 100 may obtain the correction distance information using the projection surface brightness value. The electronic apparatus 100 may have difficulty obtaining the environmental illuminance value when the illuminance sensor 121-1 may not be used. The electronic apparatus 100 may obtain the correction distance information using only the projection surface brightness value.

When the projection surface brightness value is less than or equal to the threshold value, the electronic apparatus 100 may obtain the correction distance information. The electronic apparatus 100 may move closer to the projection surface 10. The electronic apparatus 100 may obtain the correction distance information based on the projection surface brightness value. The lower the projection surface brightness value, the greater the correction distance. The lower the projection surface brightness value obtained from the captured image, the closer the electronic apparatus 100 may determine to move to the projection surface 10.

According to various embodiments, the electronic apparatus 100 may obtain the correction distance information based on a pre-stored distance-specific brightness database.

The brightness value of the light source output from the projection unit 112 may be preset. When the brightness value of the light source output by the projection unit 112 is within a preset range, a representative brightness value may exist. The electronic apparatus 100 may determine the average brightness value or the central brightness value that the projection unit 112 may output as the representative brightness value.

When the light source is output with a representative brightness value, the brightness value (third brightness value) of the projection area recognized may vary depending on the distance. The closer the distance, the higher the brightness value (third brightness value) of the projection area.

The electronic apparatus 100 may pre-store the distance-specific brightness database including the distance-specific brightness value of the projection area in the memory 113. For example, the distance-specific brightness database may include a brightness value of the projection area measured at 1 m, a brightness value of the projection area measured at 2 m, and a brightness value of the projection area measured at 3 m.

The distance-specific brightness database may be described as a distance-specific brightness table, distance-specific brightness table information, or a distance-brightness mapping database.

For example, the electronic apparatus 100 may predict the distance between the projection surface and the electronic apparatus 100 based on the brightness value of the projection area measured at the current point in time and the pre-stored distance-specific brightness database. The electronic apparatus 100 may obtain the correction distance information based on the predicted distance.

For example, the electronic apparatus 100 may identify the correction distance information based on the pre-stored distance-specific brightness database to output the projection image with a desired brightness value.

According to various embodiments, the electronic apparatus 100 may obtain the correction distance information using the ambient environmental illuminance value. In the above description, the projection surface brightness value may be replaced with the ambient environmental illuminance value. Duplicate descriptions will be omitted.

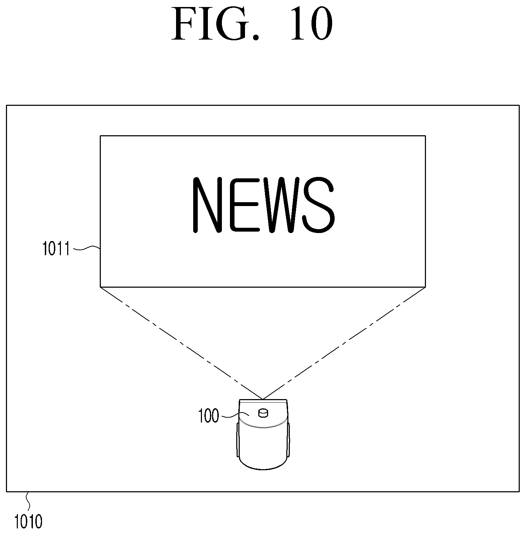

FIG. 10 is a diagram for describing an operation of outputting the projection image according to an embodiment.

Referring to embodiment 1010 of FIG. 10, the electronic apparatus 100 may output the projection image to the projection surface 10. The projection image may be described as content.

According to various embodiments, the electronic apparatus 100 may receive the projection image through an external source device. The external source device may include a content providing device or a set-top box. The electronic apparatus 100 may be connected to the external source device through an input/output interface. For example, the input/output interface may include HDMI.

The electronic apparatus 100 may obtain brightness information (or brightness value) about the projection image (or projected content) received from the external source device. The brightness information may be described as the average brightness information or the average brightness value. The electronic apparatus 100 may obtain the brightness information using the pixel information of the projection image received from the external source device.

When the projection image is a still image, the electronic apparatus 100 may obtain the average brightness value of the plurality of pixels included in the projection image.

When the projection image is a video, the electronic apparatus 100 may obtain the average brightness value of each of the multiple frames included in the video.

The projection image may be a test image for brightness value adjustment. The test image may be an image including only a single color value. The test image may be a monochrome image.

The brightness information about the projection image (or projected content) may be described as the brightness value of the projection image. The brightness value of the projection image may be described as the second brightness value.

According to various embodiments, the electronic apparatus 100 may receive the projection image from the external server. The electronic apparatus 100 may analyze the projection image received from the external server to obtain the brightness information about the projection image. The electronic apparatus 100 may be connected to the external server via the communication interface 114. The communication interface 114 may include a wired communication module. The wired communication module may include a communication module for connecting to an Internet network. The external server may include a content providing server.

According to various embodiments, the electronic apparatus 100 may receive the projection image through an antenna. The electronic apparatus 100 may receive the radio frequency (RF) signal including the projection image through the antenna. The communication interface 114 may include a wireless communication module. The wireless communication module may include the antenna.

According to various embodiments, the electronic apparatus 100 may receive the projection image from the user terminal device. The electronic apparatus 100 may analyze the projection image received from the user terminal device to obtain the brightness information of the projection image. The electronic apparatus 100 may be connected to the user terminal device using a Wi-Fi communication module or a short-range communication module (e.g., NFC).

According to various embodiments, the electronic apparatus 100 may output the projection image to the projection surface 10 and then obtain the captured image using the image sensor 121-2. After the projection image is output to the projection surface 10, the electronic apparatus 100 may obtain the captured image through the image sensor 121-2. The captured image may include the projection image projected onto the projection surface 10.

According to various embodiments, the electronic apparatus 100 may obtain the captured image through the external device 200 while the projection image is output to the projection surface 10. After the projection image is output to the projection surface 10, the electronic apparatus 100 may obtain the captured image through the external device 200. After the projection image is output to the projection surface 10, the electronic apparatus 100 may generate the control command for capturing the projection surface 10 from the external device 200. The electronic apparatus 100 may transmit the control command to the external device 200. The external device 200 may receive the control command and capture the projection surface 10. The external device 200 may obtain the captured image and transmit the obtained captured image to the electronic apparatus 100. The electronic apparatus 100 may receive the captured image from the external device 200. The external device 200 may include an Internet of Things (IoT) camera or a user terminal device including a camera.

According to various embodiments, the electronic apparatus 100 may calculate the sharpness of the captured image. When the sharpness of the captured image is less than or equal to the threshold sharpness, the electronic apparatus 100 may change the projection position so that the projection position is closer to the projection surface 10.

According to various embodiments, the electronic apparatus 100 may obtain the brightness value of the captured image. When the brightness value of the captured image is less than or equal to the threshold value, the electronic apparatus 100 may change the projection position. The changed projection position may include a position closer to the projection surface 10 than the current position.

The brightness value of the captured image may be described as the third brightness value.

According to various embodiments, the electronic apparatus 100 may obtain the brightness value of the projection image. The electronic apparatus 100 may obtain the brightness value of the captured area. Each brightness value may include an average brightness value.

The electronic apparatus 100 may obtain a difference value between the brightness value of the projection image and the brightness value of the captured image. When the difference value is greater than or equal to the threshold value, the electronic apparatus 100 may change the projection position. The changed projection position may include a position closer to the projection surface 10 than the current position.

When the difference value is less than or equal to the threshold value, the electronic apparatus 100 may not change the projection position. When the difference value is within the threshold range, the electronic apparatus 100 may not change the projection position.

According to various embodiments, the electronic apparatus 100 may obtain the environmental illuminance value before outputting the projection image. Before outputting the projection image, the correction distance information may be determined based on the environmental illuminance value. The electronic apparatus 100 may determine the projection position based on the correction distance information.

After outputting the projection image, the electronic apparatus 100 may obtain the brightness value of the captured image. The electronic apparatus 100 may compare the brightness value of the projection image with the brightness value of the captured image to determine whether to change the projection position. For example, the electronic apparatus 100 may change the projection position and move to the changed projection position.

According to various embodiments, after outputting the projection image, the electronic apparatus 100 may determine the projection position based on the environmental illuminance value, the brightness value of the projection image, and the brightness value of the captured image. The electronic apparatus 100 may obtain the difference value between the brightness value of the projection image and the brightness value of the captured image.

When the environmental illuminance value is less than or equal to the first threshold value and the difference value is less than or equal to the second threshold value, the electronic apparatus 100 may change the projection position of the electronic apparatus 100.

According to various embodiments, the electronic apparatus 100 may obtain the environmental illuminance value before outputting the projection image. Before outputting the projection image, the correction distance information may be determined based on the environmental illuminance value. The electronic apparatus 100 may determine the projection position based on the correction distance information.

According to various embodiments, the electronic apparatus 100 may obtain a brightness value of the projection image and a brightness value of the captured image after outputting the projection image. The electronic apparatus 100 may compare the brightness value of the projection image with the brightness value of the captured image to determine whether to change the projection position. The electronic apparatus 100 may obtain the difference value between the brightness value of the projection image and the brightness value of the captured image. The electronic apparatus 100 may determine the projection position based on the difference value. When the difference value exceeds the threshold value, the electronic apparatus 100 may change the projection position. The electronic apparatus 100 may move closer to the projection surface 10 as the difference value increases.

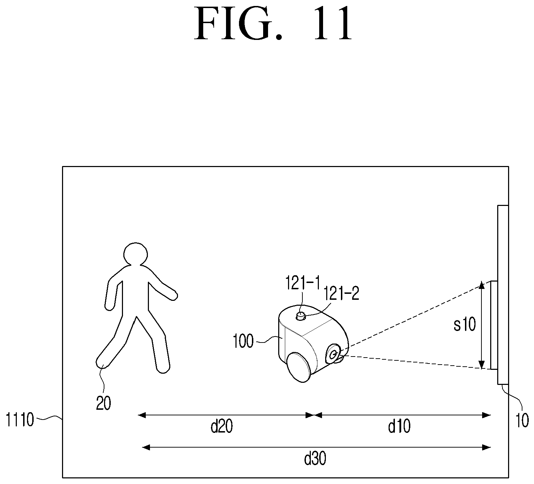

FIG. 11 is a diagram for describing an operation of obtaining distance information based on a projection surface 10, a user 20, and an electronic apparatus 100, according to an embodiment.

Referring to embodiment 1110 of FIG. 11, the electronic apparatus 100 may obtain (or calculate) the distance d20 between the electronic apparatus 100 and the user 20. The sensor unit 121 may include a sensor for measuring the distance. The sensor for measuring the distance may include at least one of the image sensor 121-2, the LiDAR sensor, and the 3D time of flight (ToF) sensor.

The electronic apparatus 100 may obtain (or calculate) the distance d10 between the electronic apparatus 100 and the projection surface 10. The electronic apparatus 100 may obtain the first distance d10 based on the sensing data obtained through the sensor unit 121.

The electronic apparatus 100 may obtain the third distance d30 by adding the first distance d10 and the second distance d20. The distance d30 may represent the distance between the projection surface 10 and the user 20.

The first distance d10, the second distance d20, and the third distance d30 may be described as distance values, etc.

The electronic apparatus 100 may identify the position of the user 20 based on at least one of the first distance d10, the second distance d20, and the third distance d30. The electronic apparatus 100 may determine the position of the user 20 in the space where the electronic apparatus 100 exists.

The electronic apparatus 100 may change the resolution of the projection image based on the preset event. Changing the resolution may include changing the size of the projection image. For example, when the resolution is changed while the position of the electronic apparatus 100 is fixed, the size of the projection image output on the projection surface 10 may change.

The electronic apparatus 100 may identify the movement distance required to move from the current position to the projection position. The preset event may include an event identifying the movement distance as being greater than or equal to the threshold distance.

When the movement distance is greater than or equal to the threshold distance, the electronic apparatus 100 may change the resolution of the projection image.

As the electronic apparatus 100 gets closer to the projection surface 10, the size of the projection area where the projection image is output on the projection surface 10 may also decrease. The electronic apparatus 100 may increase (or expand) the projection area by increasing the size of the projection image.

As the electronic apparatus 100 moves away from the projection surface 10, the size of the projection area where the projection image is output to the projection surface 10 may also increase. The electronic apparatus 100 may reduce (or decrease) the projection area by reducing the size of the projection image.

When the movement distance is less than the threshold distance, the electronic apparatus 100 may maintain the resolution of the projection image. When the movement distance is less than the threshold distance, the electronic apparatus 100 may determine that the projection image output with the current settings is suitable for the user.

According to various embodiments, the electronic apparatus 100 may obtain (or calculate) the measured size (s10) of the projection image output to the projection surface 10. The electronic apparatus 100 may obtain (or calculate) the measured size of the projection image output after moving according to the movement distance.

The unit of the measured size (s10) of the projection image may be the same as the distance unit. The measured size of the projection image may be expressed as the length of the projection image.

The electronic apparatus 100 may obtain the degree of change in the measured size of the projection image. The degree of change may include the difference value between the measured size of the projection image before the change and the measured size of the projection image after the change.

The electronic apparatus 100 may change the size of the user interface (UI) element provided by the electronic apparatus 100 based on the change in the projection position (moving closer to the projection surface 10).

FIG. 12 is a diagram for describing an operation of changing a size of a UI element, according to an embodiment.

Referring to embodiment 1210, the electronic apparatus 100 may output a projection image 1211 and a UI element 1215.

Referring to embodiment 1220, the electronic apparatus 100 may output a projection image 1211 at a specific position (second projection position) and a UI element 1225 with a changed size. The electronic apparatus 100 may maintain the size of the projection image 1211 at a specific position (second projection position) and change the size of the UI element 1225.

When the first distance d10 between the electronic apparatus 100 and the projection surface 10 decreases, the electronic apparatus 100 may increase (or enlarge) the size of the UI element. The electronic apparatus 100 may determine the change ratio of the UI element based on the movement distance.

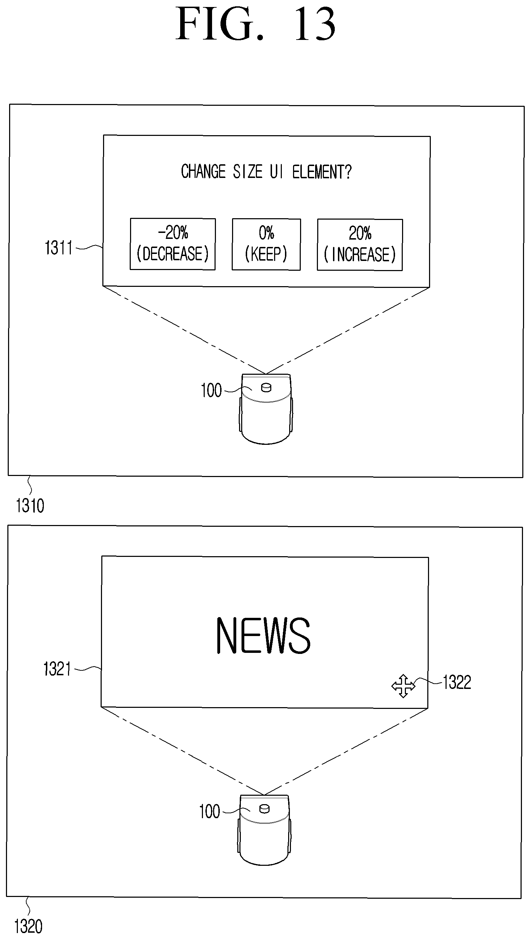

FIG. 13 is a diagram for describing a screen for changing the size of the UI element, according to an embodiment.

Referring to embodiment 1310 of FIG. 13, the electronic apparatus 100 may change the size of the UI element based on the user input. When the user input for changing the size of the UI element is received, the electronic apparatus 100 may change the size of the UI element and output the UI element.

For example, when an event is identified in which the measured size of the projection image changes, the electronic apparatus 100 may output a guide screen 1311 for changing a UI element.

For example, when the degree of change in the measured size of the projection image exceeds the threshold value, the electronic apparatus 100 may output the guide screen 1311 for changing a UI element.

Referring to embodiment 1310, the electronic apparatus 100 may output the guide screen 1311 for changing the size of the UI element. The guide screen 1311 may include at least one of text information related to changing the size of the UI element and the information representing the degree of change.

When the user input is received through the guide screen 1311, the electronic apparatus 100 may change the size of the UI element based on the user input.

Referring to embodiment 1320 of FIG. 13, the electronic apparatus 100 may use a GUI 1322 for changing the size of the UI element. The electronic apparatus 100 may output a projection image 1321 together with the GUI 1322. The GUI 1322 may be described as a movement menu, a movement icon, a movement item, etc. When the user input for changing at least one of the position or size of the projection image 1321 is received through the GUI 1322, the electronic apparatus 100 may change at least one of the position or size of the projection image 1321 based on the user input. When the GUI 1322 moves by the user input, the user may recognize the changed projection image 1321 in real time.

According to various embodiments, when the degree of change in the measured size of the projection image is less than or equal to the threshold value, the electronic apparatus 100 may not change the size of the UI element. The electronic apparatus 100 may maintain the size of the UI element.

According to various embodiments, when the degree of change in the measured size of the projection image is less than or equal to the threshold value, the electronic apparatus 100 may output the guide screen 1311 for changing the UI element.

According to various embodiments, the electronic apparatus 100 may identify (or obtain) the measured size of the UI element output to the projection surface 10. When the measured size of the UI element output to the projection surface 10 is less than or equal to the threshold value, the electronic apparatus 100 may select a specific UI element based on the user input. For example, the user input may include an input for selecting a scroll button included in the electronic apparatus 100.

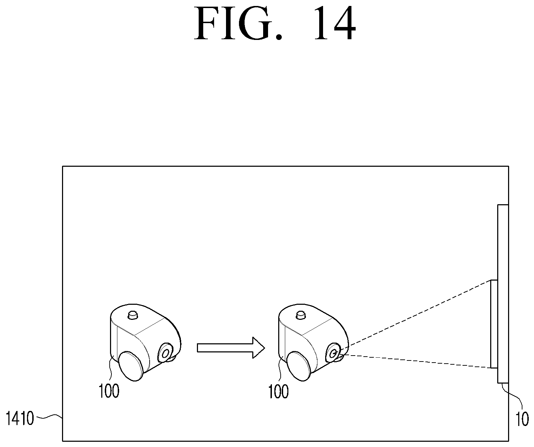

FIG. 14 is a diagram for describing a movement operation of an electronic apparatus 100, according to an embodiment.

Referring to embodiment 1410 of FIG. 14, the electronic apparatus 100 may move based on the projection position. The electronic apparatus 100 may obtain the projection position for moving the electronic apparatus 100.

According to various embodiments, the electronic apparatus 100 may move based on the projection position while not outputting the projection image. Once the projection position is identified (or obtained), the electronic apparatus 100 may determine whether the projection image is being output. When the projection image is not being output, the electronic apparatus 100 may move based on the projection position.

When the projection image is being output, the electronic apparatus 100 may stop projecting the projection image. After stopping outputting the projection image, the electronic apparatus 100 may move based on the projection position.

According to various embodiments, when the projection image is being output, the electronic apparatus 100 may move while maintaining the projection operation of the projection image. The electronic apparatus 100 may simultaneously perform an operation of outputting the projection image and an operation of moving based on a projection position.

The electronic apparatus 100 may change the resolution of the projection image while performing the movement operation. When the resolution of the projection image changes during movement, the size change of the projection image (output on the projection surface 10) that occurs due to the movement may be reduced.

The electronic apparatus 100 may change the size of the UI element while performing the movement operation. When the size of a UI element changes during movement, the size change of the UI element (output on the projection surface 10) that occurs due to the movement may be reduced.

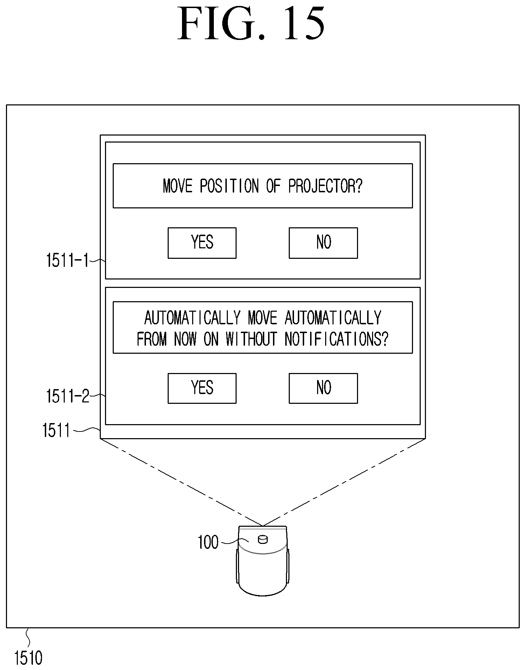

FIG. 15 is a diagram for describing a notification regarding position movement, according to an embodiment.

Referring to embodiment 1510 of FIG. 15, when a movement event is identified based on the projection position, the electronic apparatus 100 may output a movement notification screen 1511.

The movement notification screen 1511 may include at least one of a UI 1511-1 requesting the user input regarding the position movement of the electronic apparatus 100 or a UI 1511-2 for setting whether to display the movement notification screen.

When a user input including a movement command is received through the UI 1511-1, the electronic apparatus 100 may move based on the projection position.

When the user input is received through the UI 1511-2 to set the movement without the movement notification screen, the electronic apparatus 100 may no longer display the movement notification screen 1511. When the electronic apparatus 100 moves after receiving the user input, the electronic apparatus 100 may not display the movement notification screen 1511.

According to various embodiments, the electronic apparatus 100 may automatically move based on the projection position without providing the movement notification screen. The electronic apparatus 100 may detect the change in the size of the projection image due to the movement. The size of the projection image output to the projection surface 10 may be described as the measured size. The electronic apparatus 100 may obtain the degree of change in the measured size of the projection image. The electronic apparatus 100 may control the movement speed so that the change in the measured size does not occur abruptly.

The electronic apparatus 100 may move at a movement speed that is equal to or less than the threshold speed. When the electronic apparatus 100 moves less than or equal to the threshold speed, the size of the projection image output to the projection surface 10 may not change abruptly.

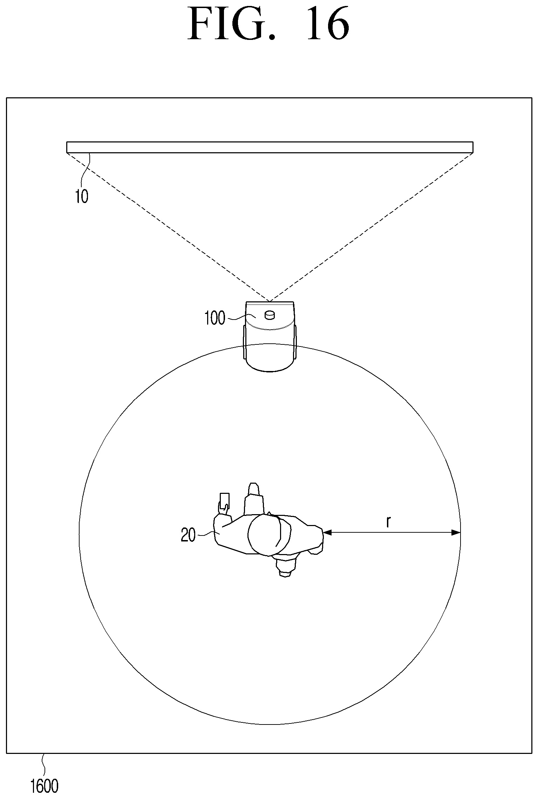

FIG. 16 is a diagram for describing a reference for position movement, according to an embodiment.

Referring to embodiment 1600 of FIG. 16, the electronic apparatus 100 may be controlled to be positioned outside a preset range or threshold distance r relative to the user 20 based on the preset event. The electronic apparatus 100 may identify the position of the user 20. The electronic apparatus 100 may move to a position outside the threshold distance r based on the position of the user 20.

The preset event may include an event in which the communication signal strength used to receive the projection image is identified as being less than or equal to the threshold strength.

The electronic apparatus 100 may receive content including the projection image from an external device. The external device may be an external server or a content providing device that provides content. For example, the external device may include a broadcast content providing server, an over the top (OTT) providing server, a set-top box, etc. The electronic apparatus 100 may establish a communication session with the external device and receive content based on the established communication session. The electronic apparatus 100 may communicate with the external device.

The electronic apparatus 100 may identify the communication connection status with the external device. When the communication connection is weak, the projection image output may be interrupted or its quality may deteriorate. When the communication connection is weak, the audio data and the image data may not be synchronized.

The communication connection status may be determined based on the communication signal strength. The electronic apparatus 100 may identify the communication signal strength at the current position (the first position). When the communication signal strength is less than or equal to the threshold strength, the electronic apparatus 100 may determine that the communication connection is poor. When the communication signal strength is less than or equal to the threshold strength, the electronic apparatus 100 may move to the target position based on the communication signal strength. As the electronic apparatus 100 moves, the communication signal strength may increase. The electronic apparatus 100 may move to the target position based on the communication signal strength.

The target position may include any position that exceeds the threshold distance away from the position of the user 20. The electronic apparatus 100 may identify the position of the user 20. The electronic apparatus 100 may determine one (second position) of the multiple positions that are greater than or equal to the threshold distance away from the position of the user 20 as the target position. The electronic apparatus 100 may determine the position closest to the electronic apparatus 100 among the multiple positions as the target position. After moving from the first position to the second position, the electronic apparatus 100 may re-identify the communication signal strength. When the communication signal strength identified at the second position is less than or equal to the threshold strength, the electronic apparatus 100 may determine, as the target position, the third position other than the second position, among the multiple positions.

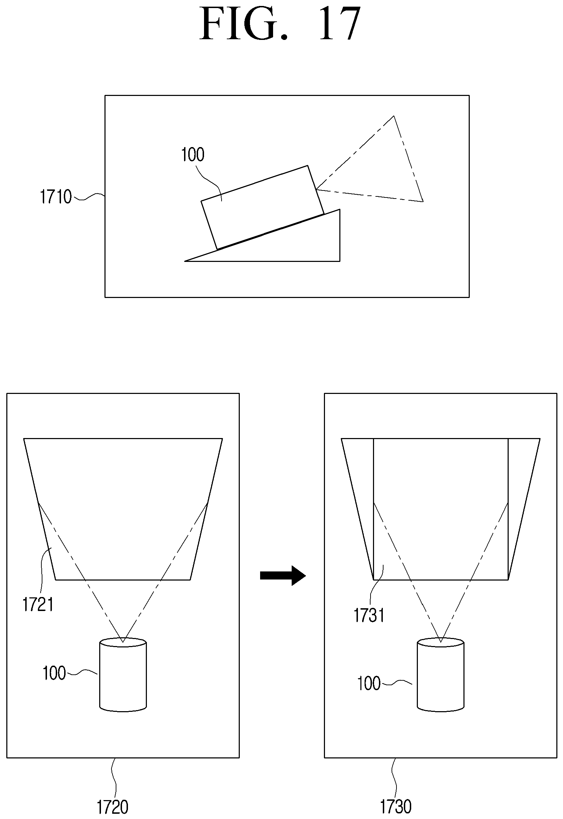

FIG. 17 is a diagram for describing the keystone correction function, according to an embodiment.

Referring to embodiment 1710 of FIG. 17, when the tilt of the electronic apparatus 100 changes due to the positional movement, the electronic apparatus 100 may perform the keystone correction function. The keystone correction function may include an operation of correcting a trapezoidal image into a rectangular shape.

The electronic apparatus 100 may output the projection image while there is a vertical tilt.

Referring to embodiment 1720, the electronic apparatus 100 may output a projection image 1721 while there is a vertical tilt. Due to the vertical tilt, the projection image 1721 may be output in a trapezoidal shape rather than a rectangle that is an original image shape. To address issues occurring from the presence of the horizontal tilt, the electronic apparatus 100 may perform the keystone function.

Referring to embodiment 1730, the electronic apparatus 100 may perform a keystone function to modify the original image so that the finally output projection image 1731 becomes rectangular.

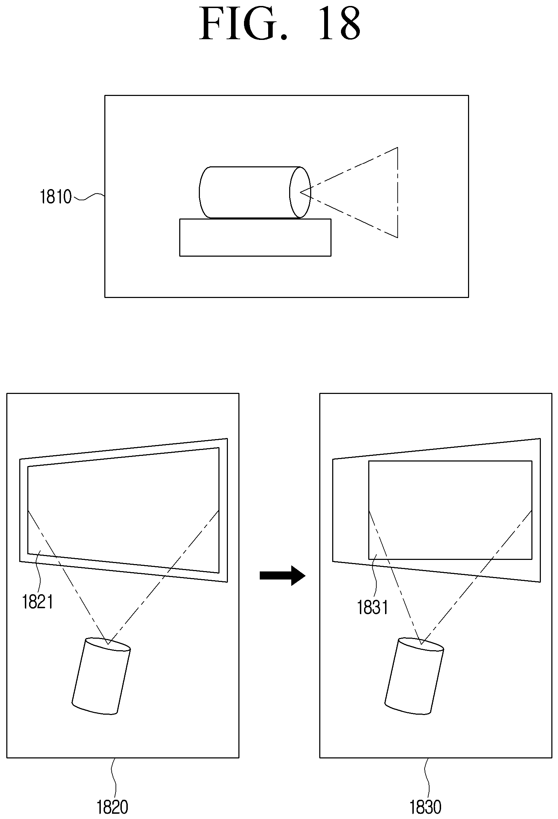

FIG. 18 is a diagram for describing the keystone correction function, according to an embodiment.

Referring to embodiment 1810 of FIG. 18, when the tilt of the electronic apparatus 100 changes due to the positional movement, the electronic apparatus 100 may perform the keystone correction function.

The electronic apparatus 100 may output the projection image while there is a horizontal tilt.

Referring to embodiment 1820, the electronic apparatus 100 may output a projection image 1821 while there is the horizontal tilt. Due to the horizontal tilt, the projection image 1821 may be output in a trapezoidal shape rather than a rectangle that is an original image shape. To address issues occurring from the presence of the horizontal tilt, the electronic apparatus 100 may perform the keystone function.

Referring to embodiment 1830, the electronic apparatus 100 may perform a keystone function to modify the original image so that the finally output projection image 1831 becomes rectangular.

According to various embodiments, the electronic apparatus 100 may perform the keystone correction at various points in time. It is assumed that the electronic apparatus 100 is positioned at the first position (current position). It is also assumed that the electronic apparatus 100 moves to the second position (projection position) and outputs the projection image.

For example, the electronic apparatus 100 may perform keystone correction at the first position. After completing the keystone correction at the first position, the electronic apparatus 100 may move to the second position. The electronic apparatus 100 may output the projection image with the keystone correction performed at the second position.

For example, the electronic apparatus 100 may perform keystone correction while moving from the first position to the second position. The electronic apparatus 100 may output the projection image with the keystone correction performed at the second position.

For example, the electronic apparatus 100 may perform keystone correction at the second position. The electronic apparatus 100 may output the projection image with the keystone correction performed at the second position.

According to various embodiments, the electronic apparatus 100 may output the projection image while moving. To output the projection image while moving, the electronic apparatus 100 may perform the keystone correction in real time while moving. The electronic apparatus 100 may perform the keystone correction based on each position while moving from the first position to the second position. The electronic apparatus 100 may output the projection image on which the keystone correction has performed in real time at each position while moving. The keystone correction may be increasingly performed at each position.

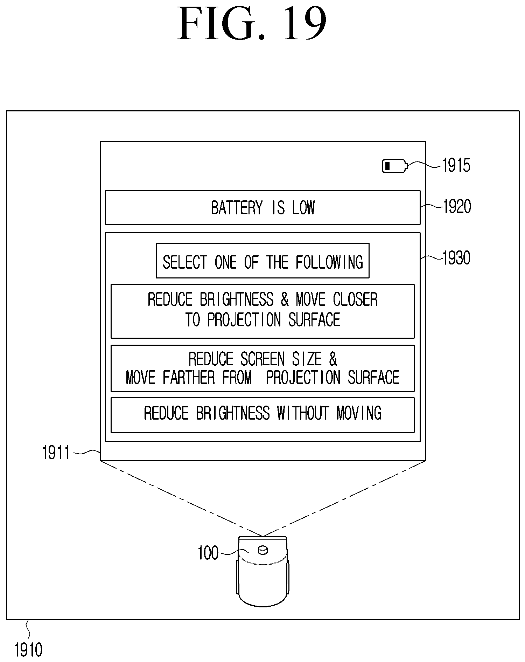

FIG. 19 is a diagram for describing a screen related to power information, according to an embodiment.

Referring to FIG. 19, the electronic apparatus 100 may obtain power information of the electronic apparatus 100. The power information may include the remaining battery level of the electronic apparatus 100.

Referring to embodiment 1910, when the remaining battery level is less than or equal to the threshold value, the electronic apparatus 100 may display a screen 1911 corresponding to a low battery event.

The screen 1910 may include at least one of a UI 1920 representing that the remaining battery level is low and a UI 1930 representing an operation corresponding to the low battery event. The operation corresponding to the low battery event may include an operation of lowering the brightness and moving toward the projection surface 10, or an operation of reducing the size of the projection image and moving the projection image away from the projection surface 10. When the user input is selected through the UI 1930, the electronic apparatus 100 may perform the operation corresponding to the user input.

The UI 1930 may include at least one of an item for lowering the brightness and moving closer to the projection surface, an item for lowering the screen size and moving further away from the projection surface, and an item for lowering only the brightness without moving.

The electronic apparatus 100 may perform the operation corresponding to the low battery event without providing the screen 1910.

According to various embodiments, when the remaining battery level is less than or equal to the threshold value, the electronic apparatus 100 may reduce the brightness of the light source of the projection unit 112. When the brightness of the light source decreases, the battery consumption may decrease. After reducing the brightness of the light source, the electronic apparatus 100 may move toward the projection surface 10. This is because, by moving toward the projection surface 10 while reducing the brightness of the light source, the brightness value of the projection image output to the projection surface 10 may be maintained. The distance to be moved may correspond to the amount of change in the brightness of the light source.

The electronic apparatus 100 may obtain the amount of change in the brightness of the light source. The electronic apparatus 100 may move toward the projection surface 10 by the movement distance corresponding to the amount of change in the brightness of the light source. The amount of change in the brightness of the light source and the movement distance may be proportional.

According to various embodiments, when the remaining battery level is less than or equal to the threshold value, the electronic apparatus 100 may reduce the size of the projection image. When the size of the projection image decreases, the battery consumption may decrease. After reducing the size of the projection image, the electronic apparatus 100 may move in a direction opposite to the projection surface 10. When the size of the projection image decreases, the electronic apparatus 100 may move in a direction opposite to the direction in which the electronic apparatus 100 faces the projection surface 10. The electronic apparatus 100 may move away from the projection surface 10 from the current position.

When the position of the electronic apparatus 100 changes, the electronic apparatus 100 may change the size of the UI element based on the movement distance.

The electronic apparatus 100 may change the size of the UI element based on the movement distance. The electronic apparatus 100 may change the size of the UI elements in proportion to the movement distance. When the electronic apparatus 100 moves toward the projection surface 10, the electronic apparatus 100 may enlarge the size of the UI element based on the movement distance. When the electronic apparatus 100 moves toward the opposite side of the projection surface 10, the electronic apparatus 100 may reduce the size of the UI element based on the movement distance.

When the position of the electronic apparatus 100 changes, the electronic apparatus 100 may display a guide screen for changing the size of the UI element. The guide screen may include a setting menu for changing the size of the UI element. The guide screen may include multiple items for selecting the size of the UI element. When the user input for changing the size of the UI element is received through the guide screen, the electronic apparatus 100 may change the size of the UI element based on the user input.

According to various embodiments, the electronic apparatus 100 may obtain the environmental illuminance value in real time. When the environmental illuminance value changes, the electronic apparatus 100 may change the brightness of the light source output from the projection unit 112 based on the changed environmental illuminance value.

When the environmental illuminance value decreases, the electronic apparatus 100 may increase the brightness of the light source output from the projection unit 112.

When the environmental illuminance value increases, the electronic apparatus 100 may decrease the brightness of the light source output from the projection unit 112.

The event in which the environmental illuminance value changes may include an event in which the intensity of sunlight changes. For example, at 13:00 PM, sunlight may be strong, resulting in a high environmental illuminance value. At 20:00 PM, sunlight may be weak, resulting in a low environmental illuminance value.

The event in which the environmental illuminance value changes may include an event in which the internal lighting in the space where the electronic apparatus 100 is positioned changes. For example, when a lighting switch is turned on in an internal space, the environmental illuminance value may increase due to lighting.

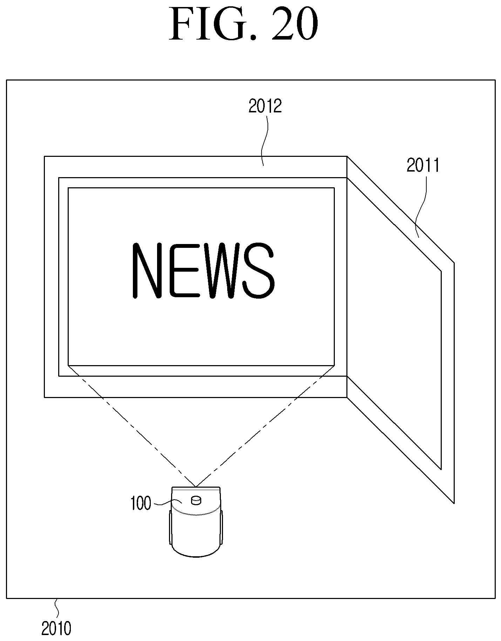

FIG. 20 is a diagram for describing an operation of changing a projection area, according to an embodiment.

Referring to embodiment 2010 of FIG. 20, when the size of the projection image changes, the electronic apparatus 100 may newly identify the projection surface corresponding to the changed size. The electronic apparatus 100 may determine the projection surface corresponding to the size of the projection image. It is assumed that there are multiple candidate projection surfaces in the space where the electronic apparatus 100 is arranged. The electronic apparatus 100 may output a projection image to a first projection surface 2011 among the multiple candidate projection surfaces. Changing the size of the projection image may include an operation of changing the resolution of the projection image or an operation of changing the aspect ratio of the projection image.

When the size of the projection image increases, the electronic apparatus 100 may determine whether the increased size of the projection image may be projected onto the first projection surface 2011. The electronic apparatus 100 may compare the size of the projection image with the size of the first projection surface 2011. When the size of the projection image is greater than that of the first projection surface 2011, the electronic apparatus 100 may determine to change the projection surface. The electronic apparatus 100 may determine a second projection surface 2012 having a size greater than that of the projection image from among the plurality of candidate projection surfaces. The electronic apparatus 100 may output the projection image to the second projection surface 2012.

According to various embodiments, the electronic apparatus 100 may determine whether to move based on attribute information of content including the projection image. The attribute information of the content may include at least one of information about the ratio of high-frequency components included in the content and information about whether to include an edge object.

When the ratio of the high-frequency components among the plurality of components included in the content is greater than or equal to a threshold ratio, the electronic apparatus 100 may move toward the projection surface 10.

When the content includes the edge object, the electronic apparatus 100 may move toward the projection surface 10.

When the electronic apparatus 100 moves toward the projection surface 10, the projection image may become clearer. The clarity of the projection image may indicate a relatively high quality of the projection image.

When the content is music-related content, the electronic apparatus 100 may move toward the projection surface 10. By moving toward the projection surface 10, the electronic apparatus 100 may reduce the battery consumption when outputting the content.

The electronic apparatus 100 may identify a moving object in the space where the electronic apparatus 100 exists through the sensor unit 121. The moving object may include at least one of a human object and an animal object. The electronic apparatus 100 may determine whether a moving object is identified based on the sensing data obtained through the sensor unit 121.

The electronic apparatus 100 may determine the size or projection position of the projection image based on the position of the moving object. The electronic apparatus 100 may determine the projection position as an area other than an area with a possibility of movement, taking into account the possibility of movement of the moving object. The electronic apparatus 100 may determine an area in which the moving object is not expected to move as the projection position.

The electronic apparatus 100 may include a microphone 118. The electronic apparatus 100 may receive the user input through the microphone 118. The user input may include a voice input. The electronic apparatus 100 may perform a function corresponding to the user input based on the user input including the user voice.

The function corresponding to the user input may include a full-screen output (full view) function. The full-screen output function may be described as a full-screen output mode. The electronic apparatus 100 may receive a voice command and perform a function corresponding to the voice command.

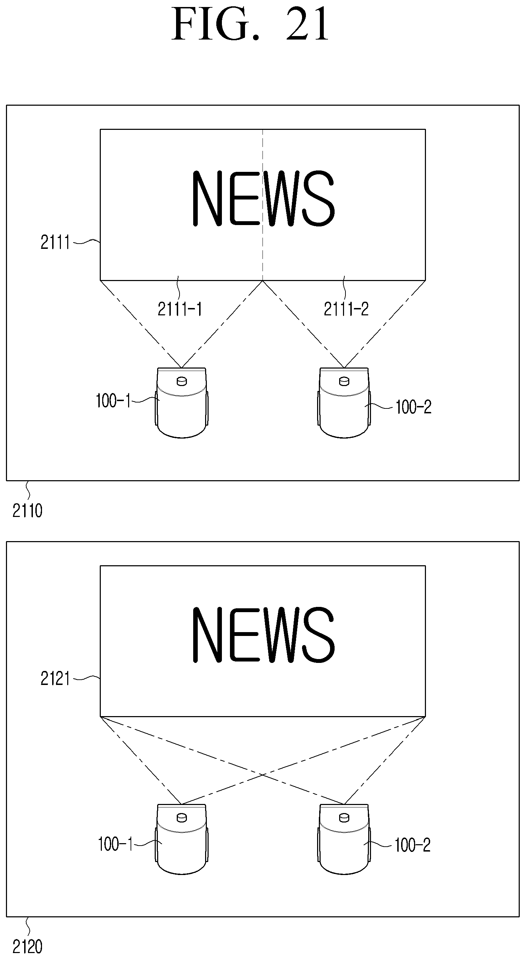

FIG. 21 is a diagram for describing an operation of outputting the projection image using a plurality of apparatuses, according to an embodiment.

Referring to embodiment 2110 of FIG. 21, according to various embodiments, a projection image 2111 may be output to the projection surface 10 by a plurality of electronic apparatuses including a projection unit. The plurality of electronic apparatuses may include a first electronic apparatus 100-1 and a second electronic apparatus 100-2.

The first electronic apparatus 100-1 may output a partial area 2111-1 of the projection image 2111 to the projection surface 10, and the second electronic apparatus 100-2 may output a partial area 2111-2 of the projection image to the projection surface 10. The electronic apparatus 100 may perform a synchronization operation to synchronize the portion projected by the first electronic apparatus 100-1 and the portion projected by the second electronic apparatus 100-2. The synchronization operation may include an operation for the plurality of electronic apparatuses to output images (or frames) at the same point in time.

The electronic apparatus 100 may perform an edge blending function when outputting the projection image to the plurality of electronic apparatuses. The edge blending function may include an operation in which a plurality of electronic apparatuses project respective images to output one screen.

When the position of the electronic apparatus 100 changes, the electronic apparatus 100 may re-perform the edge blending function.

Referring to embodiment 2120 of FIG. 21, the plurality of electronic apparatuses may display the same projection image 2121 in an overlapping manner on the projection surface 10. When different electronic apparatuses 100 output the projection images 2121 in the same area, the brightness may increase. The plurality of electronic apparatuses may perform a synchronization operation to synchronize the projection images 2121.

FIG. 22 is a diagram for describing an appropriate screen size, according to an embodiment.

Referring to FIG. 22, the electronic apparatus 100 may determine the projection position by considering the third distance d30 between the projection surface 10 and the user 20.

Table 2210 may include appropriate screen size information based on the third distance d30 between the projection surface 10 and the user 20, and distance information between the projection surface 10 and the electronic apparatus 100 for outputting the appropriate screen size. The appropriate screen size information may indicate either a horizontal length or a diagonal length of the screen.

The electronic apparatus 100 may determine multiple groups based on the third distance d30 between the projection surface 10 and the user 20. For example, the electronic apparatus 100 may classify the third distance d30 according to a preset unit or preset range.

The following example assumes that the projection ratio is 1.5.

For example, when the third distance d30 is 0 m to 1 m, the electronic apparatus 100 may determine the appropriate screen size to be 0 m to 0.5 m. When the appropriate screen size is 0 m to 0.5 m, the electronic apparatus 100 may determine the appropriate distance between the electronic apparatus 100 and the projection surface 10 to be 0.33 m or greater.

The electronic apparatus 100 may determine whether the first distance d10 corresponding to the third distance d30 is within the appropriate distance (or appropriate distance range) corresponding to the third distance d30.

When the first distance d10 corresponding to the third distance d30 is included in the appropriate distance (or appropriate distance range) corresponding to the third distance d30, the electronic apparatus 100 may not move.

When the first distance d10 corresponding to the third distance d30 is not included in the appropriate distance (or appropriate distance range) corresponding to the third distance d30, the electronic apparatus 100 may not move. The electronic apparatus 100 may identify (or calculate) a projection position for movement. The electronic apparatus 100 may move to the appropriate distance (or appropriate distance range) corresponding to the third distance d30.

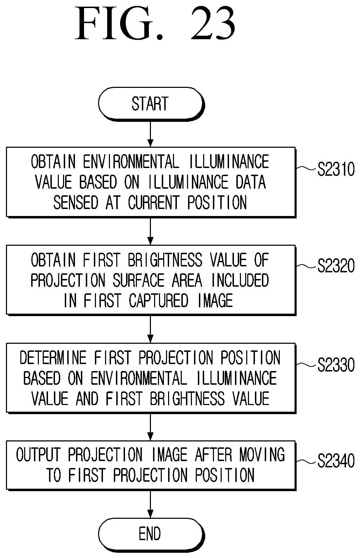

FIG. 23 is a diagram for describing an operation of determining a projection position using an environment before outputting the projection image, according to an embodiment.

Referring to FIG. 23, the electronic apparatus 100 may obtain the environmental illuminance value based on the illuminance data sensed at the current position (S2310).

The electronic apparatus 100 may obtain the first brightness value of the projection surface area included in the sensed first captured image (S2320).

The electronic apparatus 100 may determine the first projection position based on the environmental illuminance value and the first brightness value (S2330). The electronic apparatus 100 may obtain the correction distance corresponding to the environmental illuminance value and the first brightness value from the correction distance table.

After moving to the first projection position, the electronic apparatus 100 may output the projection image (S2340).

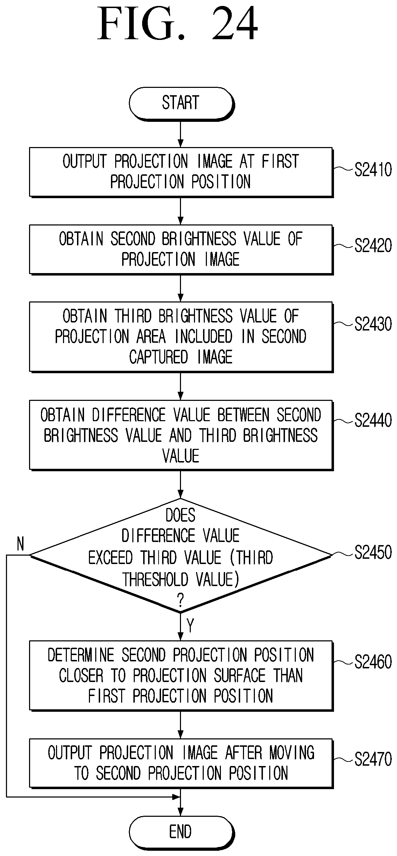

FIG. 24 is a diagram for describing an operation of determining a projection position using an environment after outputting the projection image, according to an embodiment.

Referring to FIG. 24, the electronic apparatus 100 may output the projection image at the first projection position (S2410). Step S2410 may correspond to step S2340 of FIG. 23.

The electronic apparatus 100 may obtain the second brightness value of the projection image (S2420). The second brightness value may refer to the original brightness. The electronic apparatus 100 may obtain the third brightness value of the projection area included in the second captured image (S2430).

The electronic apparatus 100 may obtain a difference value between the second brightness value and the third brightness value (S2440). The electronic apparatus 100 may determine whether the difference value exceeds the threshold value (the third threshold value) (S2450).

When the difference value exceeds the threshold value (S2450-Y), the electronic apparatus 100 may determine the second projection position closer to the projection surface 10 than the first projection position (S2460). The electronic apparatus 100 may move to the second projection position and then output the projection image (S2470).

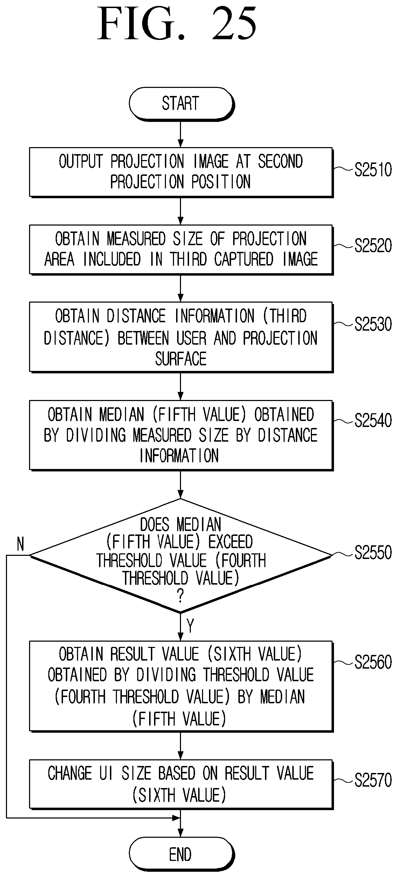

FIG. 25 is a diagram for describing an operation of changing the size of the UI element based on a measured size of a proj ection area, according to an embodiment.

Referring to FIG. 25, the electronic apparatus 100 may output the projection image at the second projection position (S2510). Step S2510 may correspond to step S2470 of FIG. 24.

The electronic apparatus 100 may obtain the measured size of the projection area included in the sensed third captured image (S2520). The measured size may include at least one of the horizontal length, the vertical length, the diagonal length, and the width of the projection area included in the third captured image.

The electronic apparatus 100 may obtain the distance information (the third distance, d30) between the projection surface 10 and the user 20 (S2530). The electronic apparatus 100 may obtain a median (fifth value) obtained by dividing the measured size by the distance information (the third distance) (S2540).

The electronic apparatus 100 may determine whether the median (the fifth value) exceeds the threshold value (the fourth threshold value) (S2550).

When the median (the fifth value) exceeds the threshold value (the fourth threshold value) (S2550-Y), the electronic apparatus 100 may obtain a result (sixth value) obtained by dividing the threshold value (the fourth threshold value) by the median (the fifth value) (S2560). The electronic apparatus 100 may change the UI size based on the result (the sixth value).

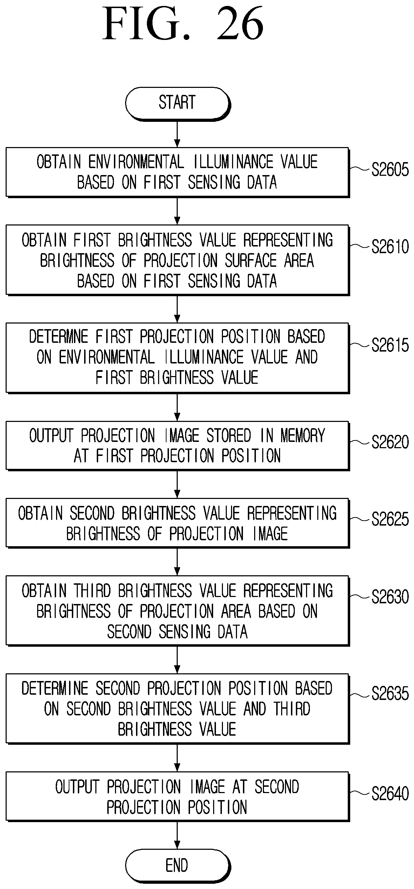

FIG. 26 is a diagram for describing a control method of the electronic apparatus 100 according to an embodiment.

Referring to FIG. 26, the control method of the electronic apparatus 100 includes a step of obtaining the environmental illuminance value based on the first sensing data (S2605), a step of obtaining the first brightness value representing the brightness of the projection surface area based on the first sensing data (S2610), a step of determining the first projection position based on the environmental illuminance value and the first brightness value (S2615), a step of outputting the projection image stored in the electronic apparatus 100 at the first projection position (S2620), a step of obtaining the second brightness value representing the brightness of the projection image (S2625), a step of obtaining the third brightness value representing the brightness of the projection area based on the second sensing data after the projection image is output to the projection surface (S2630), a step of determining the second projection position based on the second brightness value and the third brightness value (S2635), and a step of outputting the projection image at the second projection position (S2640).

The step of obtaining the environmental illuminance value may include obtaining the first sensing data including the illuminance data, and obtaining the environmental illuminance value representing the intensity of light in the ambient environment based on the illuminance data.

The step of obtaining the first brightness value may include obtaining the first sensing data including the first captured image, identifying the first target area representing the projection surface area corresponding to the projection surface among multiple areas included in the first captured image, and determining the average brightness value of the plurality of pixels corresponding to the first target area as the first brightness value.

The electronic apparatus 100 stores the correction distance table including multiple correction distances, and in the step of determining the first projection position, the correction distance corresponding to the environmental illuminance value and the first brightness value among the multiple correction distances may be identified, and the first projection position may be determined based on the correction distance.

The electronic apparatus 100 may further include the motor and the moving member, and the control method may further include a step of supplying force generated by the motor to the moving member to move from a current position to the first projection position.

In the step of obtaining the second brightness value, the average brightness value of the plurality of pixels included in the projection image may be obtained as the second brightness value.

In the step of obtaining the third brightness value, the second sensing data including the second captured image may be obtained, the second target area corresponding to the projection area where the projection image is output may be identified from among multiple areas included in the second captured image, and the average brightness value of the plurality of pixels corresponding to the second target area may be obtained as the third brightness value.

In the step of determining the second projection position, the difference value between the second brightness value and the third brightness value may be acquired, and when the difference value exceeds the threshold value, the second projection position closer to the projection surface than the first projection position may be determined.

The control method may further include the steps of: obtaining the first distance between the electronic apparatus 100 and the projection surface; obtaining the second distance between the electronic apparatus 100 and the user; obtaining the third distance between the user and the projection surface based on the first and second distances; obtaining the third sensing data including the third captured image; identifying the third target area corresponding to the projection area where the projection image is output from among multiple areas included in the third captured image; identifying the measured size of the third target area; and determining the size of the user interface (UI) provided by the electronic apparatus 100 based on the third distance and the measured size.

The step of determining the size of the UI may increase the size of the UI when the ratio value obtained by dividing the measured size by the third distance is less than or equal to the threshold ratio value.

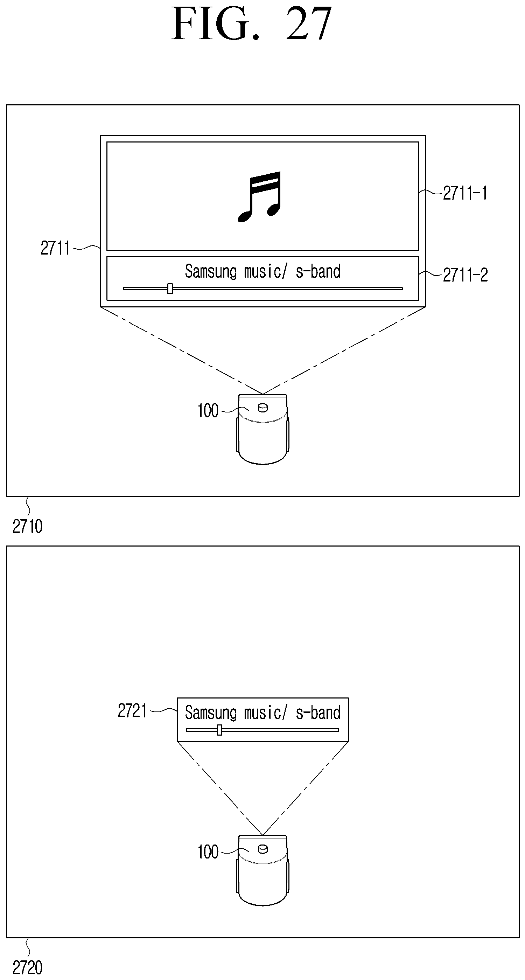

FIG. 27 is a diagram for describing an operation of changing the projection image based on distance.

By reducing the projection area while moving toward the projection surface 10, the size of the projection image (content) may be reduced. By reducing the size of the projection image, it is possible to save power consumed in outputting the projection image.

Referring to embodiment 2710 of FIG. 27, the electronic apparatus 100 may output a projection image 2711 at the projection position positioned the first distance away from the projection surface. The projection image 2711 may include a first area 2711-1 and a second area 2711-2. The first area 2711-1 and the second area 2711-2 may include different contents. The electronic apparatus 100 may divide the multiple areas 2711-1 and 2711-2 using the edge lines in the projection image 2711.

The electronic apparatus 100 may identify an event for moving the projection position closer to the projection surface while reducing a size of the projection image. The electronic apparatus 100 may identify the target area 2711-2 among the multiple areas 2711-1 and 2711-2 based on the preset criteria. The target area according to the preset criteria may include at least one of a smaller area and an area selected as a main area by the user settings.

Referring to embodiment 2720 of FIG. 27, the electronic apparatus 100 may move closer to the projection surface, but may output only the projection image 2721 corresponding to the target area 2711-2 among the multiple areas 2711-1 and 2711-2. The electronic apparatus 100 may convert the size of the image corresponding to the target area 2711-2 and output a new projection image 2721.

For example, when the content is music-related content, the electronic apparatus 100 may move toward the projection surface 10. When moving toward the projection surface 10, the electronic apparatus 100 may reduce the battery consumption by reducing the size of the first projection image when outputting the content. The first projection image related to the music content may include a first area representing an image related to music and a second area representing music playback information. When the event for reducing the size of the first projection image is identified, the electronic apparatus 100 may generate the second projection image including only the second area and output the generated second projection image. The second projection image may be smaller in size than the first projection image with respect to the projection surface. The position at which the second projection image is output may be closer to the projection surface than the position at which the first projection image is output.

The above-described methods according to various embodiments of the present disclosure may be implemented in a form of application that may be installed in the existing electronic apparatus.

The above-described methods according to various embodiments of the present disclosure may be implemented only by software upgrade or hardware upgrade of the existing electronic apparatus.

Various embodiments of the disclosure described above may also be performed through an embedded server included in the electronic apparatus or the external server of at least one of the electronic apparatus or the display device.

According to an embodiment of the disclosure, various embodiments described above may be implemented by software including instructions stored in a machine-readable storage medium (for example, a computer-readable storage medium). A machine is a device capable of calling a stored instruction from a storage medium and operating according to the called instruction, and may include the electronic apparatus of the disclosed embodiments. In the case in which a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. The term "non-transitory" means that the storage medium is tangible without including a signal, and does not distinguish whether data are semipermanently or temporarily stored in the storage medium.

According to an embodiment of the disclosure, the above-described methods according to the diverse embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store. In case of the online distribution, at least a portion of the computer program product may be at least temporarily stored in a storage medium such as a memory of a server of a manufacturer, a server of an application store, or a relay server or be temporarily generated.

Each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although embodiments of the present disclosure have been illustrated and described hereinabove, the present disclosure is not limited to the above-described specific embodiments, but may be variously modified by those skilled in the art to which the present disclosure pertains without departing from the scope of the present disclosure as disclosed in the accompanying claims. These modifications should also be understood to fall within the spirit of the present disclosure.

## Claims

1. An electronic apparatus, comprising:
a sensor unit;
a memory;
a projection unit configured to output a light source to a projection surface; and
at least one processor,
wherein the at least one processor is configured to
identify a first projection position according to an environmental illuminance value based on first data obtained through the sensor unit and a first brightness value of the projection surface,
obtain a second brightness value corresponding to brightness of a projection image output through the projection unit at the first projection position,
obtain a third brightness value corresponding to brightness of a projection area based on second data obtained through the sensor unit while the projection image is being output, and
control the projection unit such that the projection image is output at a second projection position identified based on the second brightness value and the third brightness value.

2. The electronic apparatus as claimed in claim 1, wherein the at least one processor is configured to obtain the environmental illuminance value corresponding to the intensity of light in an ambient environment based on the first data, which includes illuminance data obtained through an illuminance sensor included in the sensor unit.

3. The electronic apparatus as claimed in claim 1, wherein the at least one processor is configured to obtain the first data including a first image obtained through an image sensor included in the sensor unit, and
identify an average brightness value of a plurality of pixels in a first target area corresponding to the projection surface among multiple areas included in the first image as the first brightness value of the projection surface.

4. The electronic apparatus as claimed in claim 1, wherein the memory is configured to store a correction distance table including a plurality of correction distances, and
the at least one processor is configured to identify the first projection position based on a correction distance corresponding to the environmental illuminance value and the first brightness value among the plurality of correction distances.

5. The electronic apparatus as claimed in claim 1, further comprising:
a motor; and
a moving member,
wherein the at least one processor is configured to supply force generated by the motor to the moving member to move from a current position to the first projection position.

6. The electronic apparatus as claimed in claim 1, wherein the at least one processor is configured to obtain an average brightness value of a plurality of pixels included in the projection image as the second brightness value.

7. The electronic apparatus as claimed in claim 1, wherein the at least one processor is configured to obtain the second data including a second image obtained through an image sensor included in the sensor unit, and
obtain, as the third brightness value, an average brightness value of a plurality of pixels included in a second target area corresponding to the projection area to which the projection image is output among multiple areas included in the second image.

8. The electronic apparatus as claimed in claim 1, wherein the at least one processor is configured to identify the second projection position closer to the projection surface than the first projection position when a difference value between the second brightness value and the third brightness value exceeds a threshold value.

9. The electronic apparatus as claimed in claim 1, wherein the at least one processor is configured to obtain a third distance between the user and the projection surface based on a first distance between the electronic apparatus and the projection surface and a second distance between the electronic apparatus and the user,
obtain, through an image sensor included in the sensor unit, a measured size of a third target area corresponding to a projection area to which the projection image is output from among multiple areas included in the third image based on third data including a third image, and
identify a size of a user interface (UI) provided by the electronic apparatus based on the third distance and the measured size.

10. The electronic apparatus as claimed in claim 9, wherein the at least one processor is configured to increase the size of the UI when a ratio value obtained by dividing the measured size by the third distance is less than or equal to a threshold ratio value.

11. A control method of an electronic apparatus, comprising:
identifying a first projection position according to an environmental illuminance value based on obtained first data and a first brightness value of a projection surface;
obtaining a second brightness value corresponding to brightness of a projection image at the first projection position;
obtaining a third brightness value corresponding to brightness of a projection area based on obtained second data while the projection image is being output; and
outputting the projection image at a second projection position identified based on the second brightness value and the third brightness value.

12. The control method as claimed in claim 11, further comprising:
obtaining the environmental illuminance value corresponding to the intensity of light of an ambient environment based on the first data including illuminance data.

13. The control method as claimed in claim 11, wherein the control method includes:
obtaining the first data including a first image; and
identifying an average brightness value of a plurality of pixels in a first target area corresponding to the projection surface among multiple areas included in the first image as the first brightness value of the projection surface.

14. The control method as claimed in claim 11, wherein the electronic apparatus stores a correction distance table including a plurality of correction distances, and
in the identifying of the first projection position, the first projection position is identified based on a correction distance corresponding to the environmental illuminance value and the first brightness value among the plurality of correction distances.

15. The control method as claimed in claim 11, wherein the electronic apparatus further includes:
a motor; and
a moving member, and
the control method further includes supplying force generated by the motor to the moving member to move from a current position to the first projection position.
